# EUROPÄISCHE PATENTSCHRIFT

(11) **EP 2 119 242 B1**
(45) Veröffentlichungstag und Bekanntmachung des Hinweises auf die Patenterteilung: **31.08.2011**
(21) Anmeldenummer: 08716512.2
(22) Anmeldetag: 13.03.2008
(51) Int. Cl.: H04N 7/52

(54) **KODIERUNG EINER MEHRZAHL VON INFORMATIONSSIGNALEN UNTER VERWENDUNG EINER GEMEINSAMEN RECHENLEISTUNG**
CODING OF A PLURALITY OF INFORMATION SIGNALS USING COMMON COMPUTING POWER
CODAGE D'UNE PLURALITÉ DE SIGNAUX D'INFORMATIONS À L'AIDE D'UNE PUISSANCE DE CALCUL COMMUNE

(30) Priorität: 19.03.2007 DE 102007013026
(43) Veröffentlichungstag der Anmeldung: 18.11.2009
(73) Patentinhaber: Fraunhofer-Gesellschaft zur Förderung der angewandten Forschung e.V., 80686 München (DE)
(72) Erfinder: FAERBER, Nikolaus, 91052 Erlangen (DE); THOMA, Herbert, 91058 Erlangen (DE); FORSTER, Christian, 90403 Nürnberg (DE)
(74) Vertreter: Schenk, Markus
(86) Internationale Anmeldenummer: PCT/EP2008/002015
(87) Internationale Veröffentlichungsnummer: WO 2008/113510

(56) Entgegenhaltungen:
- EP-A- 0 888 009
- WO-A-2006/099695
- US-A1- 2006 224 762
- KWON D ET AL: "Performance and computational complexity optimization in a configurable video coding system" WIRELESS COMMUNICATIONS AND NETWORKING, 2003. WCNC 2003. 2003 IEEE 16-20 MARCH 2003, PISCATAWAY, NJ, USA,IEEE, Bd. 3, 16. März 2003 (2003-03-16), Seiten 2086-2089, XP010640090 ISBN: 978-0-7803-7700-4 in der Anmeldung erwähnt
- KASSIM A A ET AL: "Design and Implementation of Parallel Video Encoding Strategies Using Divisible Load Analysis" IEEE TRANSACTIONS ON CIRCUITS AND SYSTEMS FOR VIDEO TECHNOLOGY, IEEE SERVICE CENTER, PISCATAWAY, NJ, US, Bd. 15, Nr. 9, 1. September 2005 (2005-09-01), Seiten 1098-1112, XP011138383 ISSN: 1051-8215 in der Anmeldung erwähnt

## Beschreibung

Die vorliegende Erfindung bezieht sich allgemein auf die Kodierung einer Mehrzahl von Informationssignalen unter Verwendung einer gemeinsamen Rechenleistung und insbesondere auf die Steuerung einer Mehrzahl von Kodiereinrichtungen zur Kodierung einer Mehrzahl von Informationssignalen unter Verwendung einer gemeinsamen Rechenleistung.

Unter den verschiedenen Kodierungen bzw. Komprimierungen von Informationssignalen, wie z.B. Audio- oder Videosignalen, kann zwischen verlustlosen Kodierungen auf der einen Seite und verlustbehafteten Kodierungen auf der anderen Seite unterschieden werden. Verlustlose Kodierungstechniken reduzieren die Anzahl benötigter Bits zur Darstellung des Informationssignals durch eine Redundanzreduktion. Verlustbehaftete Kodiertechniken beruhen dem gegenüber alternativ oder zusätzlich auf einer Irrelevanzreduktion, wonach Signalinformationen des Informationssignals weggelassen werden, die bei der Dekodierung bzw. Rekonstruktion zwar zu einer Störung relativ zu dem ursprünglichen Informationssignal führen, aber im Verhältnis zur Komprimierungsrate gegebenenfalls verhältnismäßig gering ausfallen oder eventuell sogar für die menschliche Wahrnehmung, wie z.B. Hören oder Sehen, nicht merklich sind.

Die verlustbehaftete Kompression ist häufig Gegenstand der multimedialen Signalkompression. Ziel der multimedialen Signalkompression ist es, ein ursprüngliches Signal, wie z.B. ein Audio- oder ein Videosignal, mit einer bestimmten Bitrate R unter Minimierung des eingeführten Fehlers bzw. der eingeführten Störung D darzustellen (D = Distortion). Dies wird als Raten/Störungs-Optimierung bezeichnet. Durch Erhöhen von R ist es typischerweise möglich D zu reduzieren. Dieser Kompromiss kann beispielsweise über die Quantisierungsschrittweite Q gesteuert werden. Die Minimierung von D für eine gegebene Zielbitrate R ist bereits häufig Gegenstand von Studien gewesen, wozu beispielsweise auf A. Ortega, A., Ramchandran, K., "Rate-distortion methods for image and video compression", Signal Processing Magazine, IEEE, Bd. 15, Nr. 6, Nov. 1998, Seiten 23 - 50, verwiesen wird, welches sich mit der Videokompression beschäftigt.

Bei der RD-Optimierung ist zu beachten, dass das RD-Verhalten in dem Betrieb, d.h. das RD-Verhalten für eine bestimmte Kodiererimplementation, typischerweise signalabhängig ist und sich über die Zeit ändert. Die RD-Optimierung ist dabei ein ständig ablaufender Prozess und nicht etwa ein einmaliger Design-Prozess bei der Entwicklung des Kodierers.

Als eine Erweiterung der klassischen RD-Optimierungsaufgabe ist es möglich, mehrere, wie z.B. P, Programme gemeinsam zu betrachten, wie z.B. mehrere Programme p mit p = 1 ... P, die eine gemeinsame Zielbitrate bzw. Gesamtbitrate R teilen und gemeinsam kodiert werden. Ein erster Ansatz bei einer solchen gemeinsamen Kodierung (Joint Encoding) könnte darin bestehen, die Bitrate gleichmäßig unter den Programmen zu verteilen, d.h. jedes Programm mit einer festen Bitrate R(p) = R/P = konstant zu kodieren. Es ist allerdings vorteilhaft die Bitrate unter den Signalen dynamisch zu verteilen, abhängig von dem signal- und zeitabhängigen RD-Verhalten in jedem Programm.

Es sei beispielsweise angenommen, dass jedes Programm in zeitliche Segmente s mit s = 1 ... S und mit S der Anzahl an betrachteten Segmenten gegliedert sei, wobei jedes Segment eine feste Zeitdauer T dauere, wie z.B. T = 2 Sekunden. In diesem Fall ist das Betriebs-RD-Verhalten durch D(R,p,s) gegeben und die Gesamtstörung in den Programmen kann durch Änderung der Bitzuweisung zwischen den Programmen auf dynamische Weise von Segment zu Segment minimiert werden, d.h. durch Einstellen von R(p,s). Besitzt man Kenntnis über diese RD-Daten, so stehen eine Vielzahl von Optimierungstechniken zur Verfügung, die verwendet werden können. Der mögliche R/D-Gewinn resultiert aus der Tatsache, dass innerhalb jedes Segmentes üblicherweise Programme existieren, die "leicht" zu kodieren sind, und andere, die "schwierig" zu kodieren sind. Folglich kann demjenigen Programm eine Reservebitrate zugewiesen werden, das hiervon am meisten profitiert. Kein Gewinn wäre dann erhaltbar, wenn alle Programme das gleiche RD-Verhalten zeigten. Da dies jedoch statistisch gesehen sehr unwahrscheinlich ist, ist es vorteilhaft, Programme zu multiplexen und die Kodierrate dabei dynamisch zuzuweisen. Dies wird als statistischer Multiplex bezeichnet und wird beispielsweise in folgenden Veröffentlichungen beschrieben: Balakrishnen et al., "Benefits of statistical multiplexing in multi-program broadcasting", in Proceedings of Int. Broadcasting Convention, Sept. 1997, S. 560-565, M. W. Garret et al., "Joint source/channel coding of statistically multiplexed real-time services on packet networks", IEEE/ACM Transactions on Networking, Bd. 1, Nr. 1, S. 71-80, 1993, und US6195388.

Neben der Kodierrate R und der Störung D existiert ein weiterer wichtiger Parameter für praktische Implementierungen, nämlich die Komplexität C, die beispielsweise in CPU-Zyklen oder Millionen Befehlen pro Sekunde (MIPS = Million Instructions Per Second) gemessen wird. Typischerweise kann das RD-Verhalten dadurch verbessert werden, dass dem Encoder und/oder dem Decoder mehr Komplexität hinzugefügt wird. Folglich kann bei der gleichen Bitrate die Störung reduziert werden, wenn mehr Verarbeitungsleistung verfügbar ist. Dieses Verhalten kann in vielen Generationen von Codecs bzw. Kodierschemata über die Zeit hinweg beobachtet werden, wie z.B. anhand der H.261-, H.263- und H.264-Kodierschemata im Fall der Videokodierung. Die Verbesserung des RD-Verhaltens bei Komplexitätserhöhungen kann allerdings ebenfalls innerhalb einer bestimmten Implementierung eines Kodierschemas beobachtet werden, wenn bestimmte Kodierwerkzeuge aktiviert oder deaktiviert werden oder eine Suchtiefe verkürzt wird oder dergleichen. Für die Videokodierung ist es beispielsweise möglich, die komplexe Bewegungsschätzung und Bewegungskompensation, die zum Kodieren der vorhergesagten Frames bzw. prädizierten Frames (P-Frames) oder bidirektional prädizierten Frames (B-Frames) verwendet wird, zu vermeiden oder lediglich intra-kodierte Frames (I-Frames) zu verwenden. Dies wird typischerweise das RD-Verhalten verschlechtern aber ebenfalls die Komplexität signifikant reduzieren. Eine solche Änderung der Kodierkomplexität bzw. solche Änderungen in der Kodierstrategie können zudem am Encoder zumeist auf eine Art und Weise durchgeführt werden, die standardkonform ist, d.h. keine Änderungen in dem Decoder erforderlich machen.

Obige Komplexitätsbetrachtungen machen sich nun Softwareencoder zu Nutze, indem sie eine Optimierungssteuerung aufweisen, um den CD-Kompromiss zu steuern. Beispielsweise kann eine Steuerung fünf Optimierungspegel von "am schnellsten" zu "beste Qualität" zeigen, um es einem Benutzer zu ermöglichen, eine manuelle Einstellung vorzunehmen. Innerhalb eines Kodierers ist sogar eine weniger granulare, ja sogar beinahe kontinuierliche Steuerung möglich, indem verschiedene Kodierparameter variiert werden, wie z.B. der Frame-Typ, der Suchraum usw. Wie in dem Fall der RD-Optimierung, ist das Betriebs-CD-Verhalten typischerweise signalabhängig und ändert sich über die Zeit.

Die Minimierung von D für eine gegebene Komplexitätsgrenze Cmax ist beispielsweise in Kwon et al., "Performance and computational complexity optimization in configurable hybrid video coding system", IEEE Transactions on Circuits and Systems for Viodeo Technology, S. 31-42, Bd. 16, Nr. 1, 2006, Ping Li, Veervalli, Kassim, "Design and implementation of parallel video encoding strategies using divisable load analysis", IEEE Transctions on Circuits and Systems für Video Technology, S. 1098-1112, Bd. 15, Nr. 7CDVT-1, 2005, und in einer speziellen Sitzung mit dem Titel "Energy-Aware Video Communication", beim Picture Coding Symposium, 2006, Bijing, China erörtert worden.

Ein Thema bei der Realisierung von Kodierern ist auch der Lastausgleich bzw. das Load Balancing. Lastausgleich ist eine Technik, um Arbeit zwischen vielen Computern, Prozessen, Platten oder anderen Ressourcen bzw. Betriebsmitteln zu verteilen, um eine optimale Betriebsmittelausnutzung zu erhalten und/oder eine Berechnungszeitdauer zu verringern. Allgemein ist dies beispielsweise in Yung-Terng Wang, Morris, R.J.T., "Load Sharing in Distributed Systems", Computers, IEEE Transactions on, Bd. C-34, Nr. 3, März 1985, Seiten 204 - 217 beschrieben. In der US 6748019 wird beispielsweise ein Lastausgleich zwischen zwei sequentiellen Bestandteilen eines hybriden Kodierschemas beschrieben, nämlich des Bewegungskompensationsteils einerseits und des Restsignalkodierteils andererseits, um auf diese Weise das Auftreten von Leerlaufzeiten bei einem der beiden Bestandteile zu verhindern.

Zurückkehrend zu der Kodierung mehrerer Informationssignale wäre es nun aber wünschenswert, eine Möglichkeit zu besitzen, diese gemeinsame Kodierung noch effizienter durchführen zu können.

Die US2006/224762 beschreibt ein Verfahren und Vorrichtungen, die Multimediadaten, wie z.B. Live-Videoströme, effizient codieren. Eine Codier-Komplexität eines vorbestimmten Zeitintervalls, wie z.B. einer Sekunde, wird vor der tatsächlichen Codierung geschätzt. Die ermöglicht, dass die tatsächliche Codierung mit einem a priori Schätzwert der Komplexität ausgeführt wird, wodurch erlaubt wird, dass die Bits, die für das vorbestimmte Zeitintervall (Bitrate) zugeordnet sind, effektiv innerhalb des vorbestimmten Zeitintervalls zugeordnet sind. Ferner kann die geschätzte Komplexität zu einer Vorrichtung geliefert werden, wie z.B. einem Multiplexer, der dann die verfügbare Bandbreite für eine Sammlung von gemultiplexten Videokanälen zuordnen kann, gemäß der Codierkomplexität, die für diese Videokanäle erwartet wird, was dann ermöglicht, dass die Qualität eines bestimmten Kanals relativ konstant bleibt, sogar wenn die Bandbreite für die Sammlung von gemultiplexten Videokanälen relativ konstant ist.

Die Aufgabe der vorliegenden Erfindung besteht darin, ein Verfahren und eine Vorrichtung zur Kodierung einer Mehrzahl von Informationssignalen unter Verwendung einer gemeinsamen Rechenleistung zu schaffen, die eine effizientere Kodierung der Informationssignale ermöglichen.

Diese Aufgabe wird durch eine Vorrichtung gemäß Anspruch 1 und ein Verfahren gemäß Anspruch 14 gelöst.

Eine Erkenntnis der vorliegenden Erfindung besteht darin, dass eine effizientere Kodierung einer Mehrzahl von Informationssignalen unter Verwendung einer gemeinsamen Rechenleistung dadurch ermöglicht werden kann, dass die gemeinsame Rechenleistung zur Kodierung jedes der Mehrzahl von Informationssignalen abhängig von signalabhängigen Informationen, die von der Mehrzahl von Informationssignalen abhängen, unter den Kodiereinrichtungen der einzelnen Informationssignale verteilt wird. Die durch die Kodierung der Mehrzahl von Informationssignalen hervorgerufene Gesamtstörung ist dadurch reduzierbar oder optimierbar, indem unter Ausnutzung des typischen CD-Verhältnisses bei der Kodierung von Informationssignalen denjenigen Kodiereinrichtungen mehr Rechenleistung, zugewiesen wird, bei denen aus der höheren Rechenleistungszuweisung eine bessere Qualität bzw. geringere Störung resultiert, und denjenigen Kodiereinrichtungen eine geringere Rechenleistung zugewiesen wird, bei denen diese geringere Zuweisung eine im Vergleich geringere Störungszunahme bzw. Qualitätseinbusse mit sich bringt. Gemäß einem Aspekt wird diesen Kerngedanken aufgreifend eine Kodierparametereinstellung der Mehrzahl von Kodiereinrichtungen unter Berücksichtigung der gemeinsamen Rechenleistung derart geändert, dass eine Summe von Kodierkomplexitäten (C) der Kodiereinrichtungen einen von der gemeinsamen Rechenleistung abhängigen Wert nicht überschreitet. Gemäß einem Aspekt wird dieser Kerngedanke dadurch aufgriffen, dass die Kodierparameter einer Mehrzahl von Videokodiereinrichtungen (58₁-58_{P}), die ausgebildet sind, um eine bewegungskompensierte Schätzung von Frames und eine verlustbehaftete Kodierung eines Fehlers der bewegungskompensierte Schätzung durchzuführen, abhängig von den signalabhängigen Informationen eingestellt werden, die bewegungskompensierte Schätzung betreffen und eine Kodierkomplexität der Videokodiereinrichtungen (58₁-58p) beeinflussen.

Gemäß einem Ausführungsbeispiel der vorliegenden Erfindung wird zur Bestimmung der Zuteilung der gemeinsamen Rechenleistung unter den Kodiereinrichtungen bzw. zur Einstellung der Kodierparameter das CD-Verhalten an den einzelnen Kodiereinrichtungen bzw. der einzelnen Informationssignale sondiert, indem intermittierend die Kodierparameter der einzelnen Kodiereinrichtungen auf komplexere und/oder weniger komplexe Einstellungen geändert werden, und die daraus resultierende Änderung der Störung und Rechenkomplexität der Kodiereinrichtung ausgewertet werden. Stellt sich heraus, dass eine Umverteilung der gemeinsamen Rechenleistung bzw. eine Umstellung der Kodierkomplexitäten in einer geringeren Gesamtstörung resultiert, so wird die Rechenleistung entsprechend umverteilt und auch die Kodierparameter der Kodiereinrichtungen, deren Rechenleistung umgestellt worden ist, werden entsprechend angepasst, wie z.B. an die während der Aussondierung verwendeten Kodierparameter.

Gemäß einem weiteren Ausführungsbeispiel der vorliegenden Erfindung wird die Verteilung der gemeinsamen Rechenleistung bzw. die Einstellung der Kodierparameter mit einer Verteilung einer gemeinsamen zur Verfügung stehenden maximalen Gesamtkodierrate verknüpft, um dadurch eine Kostenfunktion zu reduzieren, die von der Gesamtstörung abhängt.

Gemäß einem weiteren Ausführungsbeispiel der vorliegenden Erfindung ist jeder Kodiereinrichtung ein eingangsseitiger Zwischenspeicher vorgeschaltet, wobei ansprechend auf ein Signal von einem eingangsseitigen Zwischenspeicher an der jeweiligen Kodiereinrichtung hin, das anzeigt, dass derselbe dazu tendiert voll zu werden, eine Umverteilung der gemeinsamen Rechenleistung derart vorgenommen wird, dass der entsprechenden Kodiereinrichtung mehr Rechenleistung zugewiesen wird.

Auf ähnliche Weise wird gemäß einem weiteren Ausführungsbeispiel auf ein Signal von einem ausgangsseitigen Zwischenspeicher einer Kodiereinrichtung hin eine Bitrate der entsprechenden Kodiereinrichtung zulasten der anderen Kodiereinrichtungen erhöht. Eingangsseitiger und/oder ausgangsseitiger Zwischenspeicher ermöglichen somit eine zeitliche Lockerung der Nebenbedingung der Einhaltung der maximal zur Verfügung stehenden Rechenleistung bzw. maximal zur Verfügung stehenden Gesamtbitrate.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Zeichnung eines exemplarischen CD-Verhaltens für ein Beispiel von exemplarisch drei Programmen über exemplarisch drei Zeitseg- mente hinweg zur Veranschaulichung der möglichen Störungsreduktion durch Komplexitätsverteilung;
- Fig. 2: ein Blockschaltbild einer Vorrichtung zur Kodie- rung einer Mehrzahl von Informationssignalen un- ter Verwendung einer gemeinsamen Rechenleistung gemäß einem Ausführungsbeispiel der vorliegenden Erfindung;
- Fig. 3: ein Blockschaltbild eines Systems zur Kodierung und Übertragung einer Mehrzahl von Informations- signalen gemäß einem Ausführungsbeispiel der vor- liegenden Erfindung;
- Fig. 4: eine schematische Zeichnung zur Veranschaulichung eines Beispiels für signalabhängige Informatio- nen, die die Steuerung in Fig. 3 zur Kodierraten- und Kodierkomplexitätsverteilung verwendet;
- Fig. 5a bis 5c: schematische Zeichnungen zur Veranschaulichung unterschiedlicher Beispiele für ein zeitdiskretes Aussondieren der Kodiersituationen der einzelnen Informationssignalkodierungen; und
- Fig. 6: ein detaillierteres Funktionsblockdiagramm der Steuerung von Fig. 3 gemäß einem Ausführungsbei- spiel der vorliegenden Erfindung.

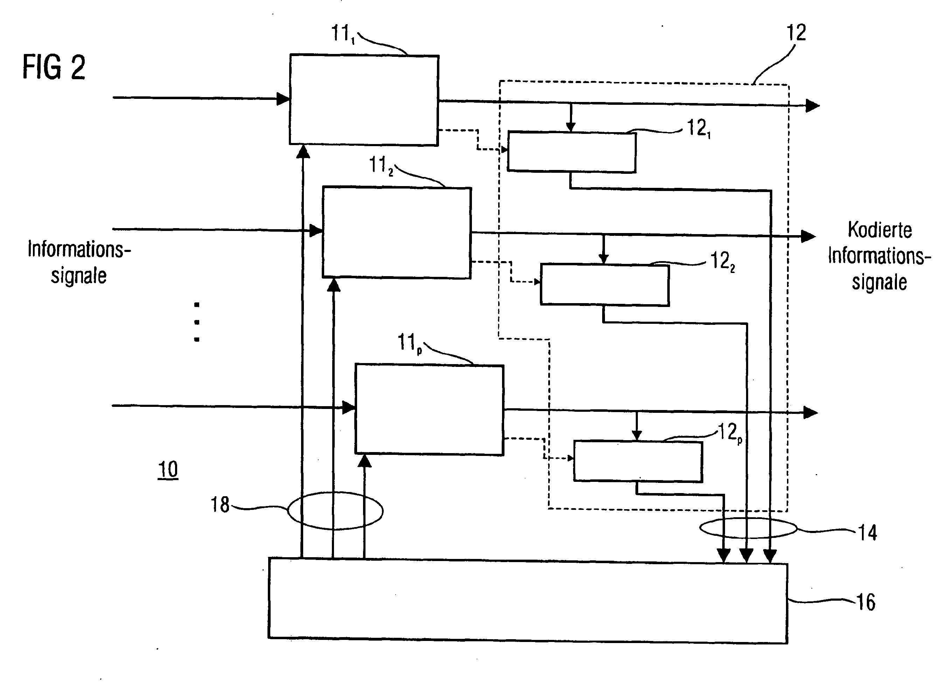

Bevor Bezug nehmend auf die Fig. 2 - 6 Ausführungsbeispiele der vorliegenden Erfindung für eine Vorrichtung zur Kodierung einer Mehrzahl von Informationssignalen unter Verwendung einer gemeinsamen Rechenleistung beschrieben werden, soll im Folgenden einleitend auf ein paar Punkte eingegangen werden, die für diese Ausführungsbeispiele gleichermaβen gelten und für das Verständnis der Wirkungsweise und der Vorteile dieser Ausführungsbeispiele nützlich sind. Dabei wird im Folgenden ebenso wie im Bezug auf die Ausführungsbeispiele in den Fig. 2 - 6 zunächst einmal exemplarisch davon ausgegangen, dass es sich bei der Mehrzahl von zu kodierenden Informationssignalen um Videosignale handelt, wie z.B. Fernsehprogramme. Die vorliegende Erfindung ist aber ohne weiteres auch auf andere Informationssignale anwendbar, wie z.B. Audiosignale, wie es am Ende der Figurenbeschreibung noch erörtert wird.

Die nachfolgenden Ausführungsbeispiele bieten eine Möglichkeit, die Störung für die Kodierung mehrerer Programme auf einer einzigen bzw. gemeinsamen Verarbeitungsplattform zu minimieren, wie z.B. die Kodierung von P Programmen mit P einer Ganzzahl größer 1. Die Verarbeitungsplattform ist beispielsweise in der Lage, mit der Gesamtkomplexität C umzugehen und kann dabei mehrere CPUs und/oder CPU-Kerne aufweisen. Für jedes der Programme ist nun eine Kodiereinrichtung bzw. ein Kodierer zur Kodierung eines jeweiligen Programms der P Programme vorgesehen. Insbesondere ist es aber nun gemäß nachfolgenden Ausführungsbeispielen möglich, die Verarbeitungsleistung unter den P Kodierern dynamisch zuzuweisen, und zwar ohne dadurch verbundene signifikante Einbussen. Möglich ist dies beispielsweise durch Implementierung jedes der Kodierer in Form von Software, d.h. als ein auf der Verarbeitungsplattform lauffähiges Programm. In diesem Fall kann die dynamische Zuweisung bzw. Verteilung der Gesamtverarbeitungsleistung dadurch erzielt werden, dass diesen Kodierprogrammen ein jeweiliger und zeitlich variabler Anteil sequentieller Verarbeitungszyklen der Verarbeitungsplattform zugewiesen wird. Gemäß den nachfolgend beschriebenen Ausführungsbeispielen wird nun die dynamische Aufteilung der Gesamtverarbeitungsleistung bzw. Gesamtrechenleistung der Verarbeitungsplattform so vorgenommen, dass die Gesamtstörung, die beispielsweise als ein mittlere Störung der kodierten Informationssignale definiert ist, reduziert bzw. eine Gesamtqualität, die beispielsweise als eine mittlere Qualität der kodierten Informationssignale definiert ist, erhöht wird.

Der Zusammenhang zwischen der Rechenleistung auf der einen und der Kodierstörung bzw. Kodierqualität auf der anderen Seite werde im Folgenden vorab kurz erläutert. Wie bereits in der Beschreibungseinleitung erwähnt ist das Betriebs-CD-Verhalten signalabhängig. Das heißt, die Abhängigkeit wird für jedes Programm p mit p = 1, ... , P und jedes zeitliche Segment s = 1,...,S unterschiedlich sein. Bei bekanntem Verhalten, das durch D(C,p,s) charakterisiert ist, ist es möglich, die Verarbeitungsleistung auf eine optimale Art und Weise unter den P Kodierern zu verteilen, derart, dass die Gesamtstörung reduziert bzw. minimiert wird. Bei bekannten CD-Daten existieren unterschiedliche Optimierungstechniken, die verwendet werden können, um eine von der Gesamtstörung abhängige Funktion extremal zu machen und dadurch die Gesamtstörung zu reduzieren. Einige Optimierungstechniken werden im Folgenden Bezug nehmend auf die Ausführungsbeispiele beschrieben. Als ein Ergebnis der Optimierung kann die verfügbare Verarbeitungsplattform effizienter verwendet werden, d.h. es resultiert eine bessere Qualität für eine gleiche maximale Last, oder, aus einer unterschiedlichen Perspektive aus betrachtet, es können mehr Programme auf der gleichen Verarbeitungsplattform bei gleicher Qualität kodiert werden.

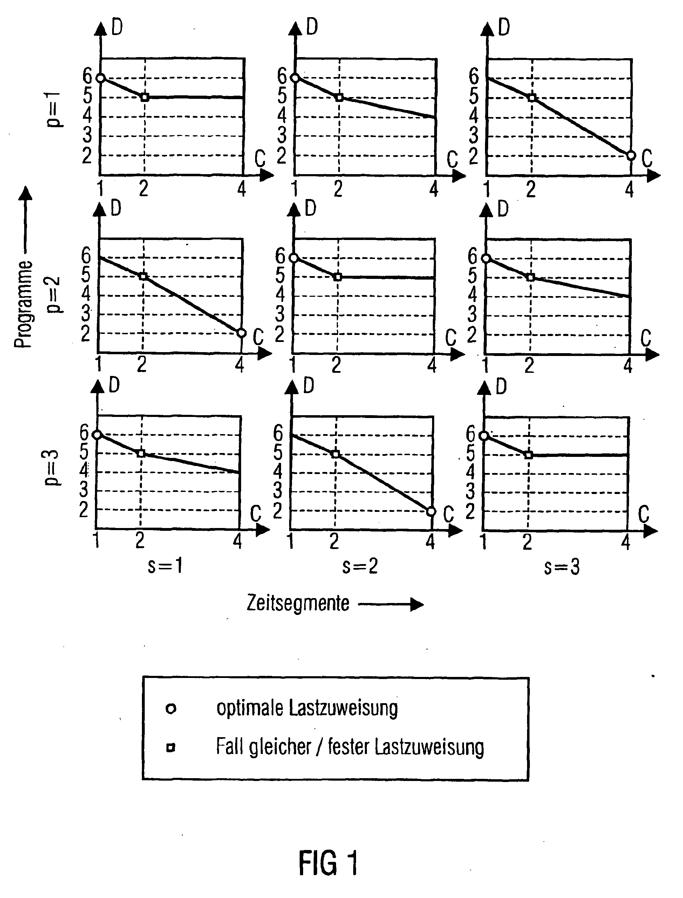

Fig. 1 veranschaulicht nun, wie sich diese Verbesserung ergibt. Insbesondere veranschaulicht Fig. 1 eine Änderung des CD-Verhaltens für ein Beispiel von P = 3 Programmen über eine Zeitdauer von drei zeitlichen Segmenten hinweg, d.h. S = 3. Insbesondere zeigt Fig. 1 exemplarisch für jedes Programm p für jedes der Zeitsegmente s das augenblickliche CD-Verhalten durch einen jeweiligen Graphen an, bei dem entlang der horizontalen Achse die Komplexität C und entlang der senkrechten Achse die Störung D aufgetragen ist. Tendenziell zeigt das CD-Verhalten jedes Programms p zu jedem Zeitsegment s eine derartiges Verhalten, dass eine Komplexitätserhöhung zu einer Störungsreduzierung führt. Allerdings ist der Grad der Reduktion pro Komplexitätserhöhung, d.h. die Steigung des CD-Verhaltens, für die unterschiedlichen Programme p und für die unterschiedlichen Zeitsegmente s unterschiedlich.

Bei dem Beispiel von Fig. 1 sei nun angenommen, dass die gesamte verfügbare Verarbeitungsleistung Cₘₐₓ = 6 sei. Um keine Missverständnisse aufkommen zu lassen, soll diese Annahme noch ein wenig präzisiert werden. Die Komplexität C der Kodierung eines der Programme p werde beispielsweise durch die Anzahl notwendiger CPU-Zyklen gemessen, die bei Vorliegen eines vorbestimmten CPU-Befehlssatzes notwendig sind, um die Kodierung durchzuführen. Unterschiedliche Komplexitäten C zur Kodierung eines Programms ergeben sich beispielsweise durch die Verwendung unterschiedlicher Kodierparameter. Die Annahme, dass die gesamte verfügbare Verarbeitungsleistung Cₘₐₓ = 6 betrage, werde nun beispielsweise derart interpretiert, dass die Verarbeitungsleistung lediglich ausreicht, um ein Programm der Komplexität C = 6 in der Zeitdauer eines Segmentes auszuführen. Erst wenn also die Gesamtkomplexität zur Kodierung der drei Programme von Fig. 1 die gesamte verfügbare Verarbeitungsleistung pro Zeitsegment nicht überschreitet, ist für jedes Zeitsegment sichergestellt, dass die Kodierung aller Programme nicht mehr Zeit benötigt als die Zeitdauer eines Segmentes. Unter diesem Gesichtspunkt ist es nun möglich, eine gleiche/feste Zuweisung bzw. Verteilung der gesamten verfügbaren Verarbeitungsleistung auf jedes der Programme p zu verwenden, was bei dem Beispiel von Fig. 1 dazu führte, dass jedem Programm bzw. jeder Programmkodierung eine Verarbeitungsleistung von Cₘₐₓ/3 = 2 Einheiten zugewiesen werden würde, was in Fig. 1 durch die quadratischen Stützpunkte in den CD-Verläufen angedeutet ist. Wie es ersichtlich ist, beträgt in diesem Fall die durchschnittliche Störung in beispielsweise dem Segment s=1 (5+5+5)/3=5. In diesem Zeitsegment kann aber eine geringere Störung erzielt werden, wenn die Last für die Verarbeitungsplattform anders verteilt wird, nämlich dynamisch abhängig von dem CD-Verhalten der einzelnen Programmkodierungen zugewiesen wird. Die Verarbeitungsleistungsverteilungen, die in den jeweiligen Segmenten s in dem Beispiel von Fig. 1 zu den jeweils geringstmöglichen Gesamtstörungen pro Zeitsegment führen, sind mit kreisförmigen Stützpunkten in den CD-Verläufen von Fig. 1 gezeigt. Beispielsweise führt in dem Zeitsegment s = 1 eine Verteilung der Rechenleistung derart, dass zur Kodierung des Programms p = 1 die Kodierkomplexität C(1) = 1 unter Zuweisung eines Anteils von 1/6 der Gesamtverarbeitungsleistung, eine Kodierkomplexität von C(2) = 4 für die Kodierung des Programms p = 2 unter Zuweisung von 4/6 der Gesamtverarbeitungsleistung und eine Kodierkomplexität von C(3) = 1 für die Kodierung des Programms p = 3 unter Zuweisung von 1/6 der verfügbaren Gesamtverarbeitungsleistung zugewiesen wird, zu einer mittleren Störung der kodierten Programme von (6+2+6)/3 = 4,66, was kleiner als das vorhergehende Ergebnis von 5 ist, und das unter Einhaltung einer eventuellen Nebenbedingung an die Kodiergeschwindigkeit zur Kodierung der einzelnen Zeitsegmente trotz der hohen Kodierkomplexität für das zweite Signal, da ja die erhöhte Rechenleistung die Abarbeitung von mehr Kodieraufgaben in gleicher Zeit ermöglicht. Folglich wird bei gleicher Komplexität eine geringere Störung erzielt.

Lediglich der Vollständigkeit halber werde an dieser Stelle dabei darauf hingewiesen, dass die Störung D beispielsweise als der MSE bzw. das mittlere Fehlerquadrat der Pixelwerte des dekodierten Programminhaltes relativ zu dem ursprünglichen Programminhalt definiert werden könnte. Alternative Definitionen sind natürlich ebenfalls möglich.

Nach der Hinführung Bezug nehmend auf Fig. 1 soll im Folgenden Bezug nehmend auf Fig. 2 eine Vorrichtung zur Kodierung einer Mehrzahl von Informationssignalen unter Verwendung von einer gemeinsamen Rechenleistung gemäß einem Ausführungsbeispiel der vorliegenden Erfindung beschrieben werden. Die Vorrichtung, die in Fig. 2 allgemein mit 10 angezeigt ist, umfasst eine Mehrzahl von Kodiereinrichtungen 11₁-11_{P} zur Kodierung eines jeweils unterschiedlichen von Informationssignalen s₁-s_{P}. Die Mehrzahl von Kodiereinrichtungen 11₁-11_{P} verwenden zur Kodierung ein gemeinsamene Rechenleistung. Sie sind beispielsweise auf einem Computer oder einer sonsitgen Rechenplattform gemeinsam implementiert und teilen sich somit die zur Verfügung stehende Rechenleistung, d.h. die Fähigkeit eine bestimmte Anzahl an Kodieraufgaben bzw. Befehle in einer festen Zeit auszuführen. Jede Kodiereinrichtung ist über zumindest einen jeweiligen Kodierparameter X₁-X_{P} hinsichtlich ihres Kodierkomplexität/Kodierstörung-Verhaltens steuerbar. Die Gesamtheit der Kodierparameter X₁-X_{P} ist mit 18 angezeigt. Eine Einrichtung 12 ist vorgesehen, um für jede der Kodiereinrichtungen 11₁-11_{P} signalabhängigen Informationen 14 zu liefern, die von dem jeweiligen Informationssignal abhängen. Die signalabhängigen Informationen 14 zeigen beispielsweise eine Kodierstörung D, eine Bitrate R, und/oder eine Komplexität C an. Eine Einrichtung 16 dient zum Einstellen der Kodierparameter X₁-X_{P} (18) abhängig von den signalabhängigen Informationen unter Berücksichtigung der gemeinsamen Rechenleistung derart, dass eine Summe von Kodierkomplexitäten der Kodiereinrichtungen einen von der gemeinsamen Rechenleistung abhängigen Wert nicht überschreitet. Die Kodiereinrichtungen 11₁-11_{P} kodieren ihr jeweiliges Informationssignal zu einem jeweiligen kodierten Informationssignal unter Verwendung des eingestellten Kodierparameters, das den Kodiereinrichtungen 11₁-11_{P} von der Einstelleinrichtung 16 mit einem Signal 18 signlisiert wird.

Die Einrichtung 16 zum Einstellen und die Mehrzahl von Kodiereinrichtungen 11₁-11_{P} wirken derart zusammen, dass in Bezug auf aufeinanderfolgende Zeitintervalle eine Verteilung der gemeinsamen Rechenleistung von den Kodierparametern oder einer Kodierkomplexität der einzelnen Kodiereinrichtungen abhängt. Anders ausgedrückt, ist es möglich, dass die Einrichtung 16 nicht nur die Kodierparameter der einzelnen Kodiereinrichtungen 11₁-11_{P} einstellt sondern auch gleich dazu die Verteilung der gemeinsamen Rechenleistung ermittelt und diese Verteilung der gemeinsame Plattform (nicht gezeigt) mitteilt, auf der die Kodiereinrichtuhgen 11₁-11_{P} implementiert sind. Dazu könnte beispielsweise die Einstelleinrichtung 16 mittels einer Nachschlagtabelle Kodiereinrichtungen 11₁-11_{P}, deren Kodierparameter auf einen "komplexen" Wert eingestellt ist und somit eine komplexe Kodierung verschreibt, einen höheren Anteil an der gemeinsamen Rechenleistung, wie z.B. einen höheren zeitlichen Protzensatz einer Prozessorleistung zuweisen und solchen mit weniger komplexen Parameterwerten weniger. Diese direkte Rechenleistungsverteilung könnte dann über das Signal 18 an die Kodiereinrichtungen 11₁-11_{P} oder die gemeinsame Rechenplattform signalisiert werden. Die nachfolgenden Beispiele gehen allerdings davon aus, dass die Rechenleistungsverteilung der Kodierparametereinstellung bzw. der tatsächlichen Kodierkomplexität der einzelnen Kodiereinrichtungen 11₁-11_{P} dadurch folgt, dass die Kodiereinrichtungen 11₁-11_{P} mit einem Satz eingestellter Kodierparameter ein Segment gleicher zeitlicher Länge des jeweiligen Informationssignals kodieren und dabei Kodiereinrichtungen, die früher fertig sind, weil ihr Kodierparameter weniger komplex war, bis zum nächsten zu kodierenden Segment warten.

Wie erwähnt sind die Kodiereinrichtungen 11₁-11_{P} über die Kodierparameter X₁-X_{P} hinsichtlich ihres Kodierkomplexität/Kodierstörung-Verhaltens steuerbar. Um dies zu veranschaulichen sei erwähnt, dass es beispielsweise eine Kodierkomplexitätsreduktion zur Folge hat, wenn eine Kodiereinrichtung bei der Kodierung des jeweiligen Informationssignals aufgrund einer Kodierparameterumstellung von einer bewegungskompensierten Prädiktion auf eine Intrakodierung wechselt. Hierdurch nimmt also die Kodierkomplexität ab

Es ist möglich, dass die Einstelleinrichtung 16 die Kodierparameter nicht unmittelbar durch ein Signal anzeigt sondern mittelbar durch ein Signal, das quasi als Zeiger dient und für die einzelnen Kodiereinrichtungen die zu verwendende Kodierkomplexität vorgibt. Je nach Signaländerung behalten dann die einzelnen Kodiereinrichtungen den Kodierparameter bei der Kodierung des jeweiligen Informationssignals bei oder stellen den Kodierparameter um, um auf die vorgeschriebene Weise eine Kodierkomplexitätsänderung auf die an dem Ausgang 18 angezeigte Art und Weise vorzunehmen. Die den Kodiereinrichtungen zugrunde liegende Verarbeitungsplattform könnte in diesem Fall dazu ausgelegt sein, das Signal am Ausgang 18 dazu zu verwenden, die Aufteilung der zur Verfügung stehenden Gesamtrechenleistung auf eine Art und Weise vorzunehmen, die der Verteilung den einzelnen, den Kodiereinrichtungen zugewiesenen Kodierkomplexitäten entspricht. Allerdings wird die Aufteilung gemäß der nächsten Ausführungsbeispiele exemplarisch eben über die gemeinsame Zeitrasterung erzielt, innerhalb derer die Kodiereinrichtungen die Segment ihres jeweiligen Informationssignals kodieren.

Umgekehrt könnte das Signal 18 der Einstelleinrichtung 16 auch nur die Rechenleistungsverteilung vorgeben, wobei die Kodereinrichtungen 11₁-11_{P} dann beispielsweise über entsprechende Tabellen ihren jeweiligen Kodierparameterwert erhalten, der nach seiner hervorgerufenen Kodierkomplexität der vorgeschriebenen Rechenleistung entspricht.

In den nachfolgenden Ausführungsbeispielen zeigt das Signal 18 dadurch eine Verteilung der gemeinsamen zur Verfügung stehenden Rechenleistung an, dass das Signal 18 für jede Kodiereinrichtung die zu verwendende Kodierparametereinstellung vorgibt, derart, dass Kodiereinrichtungen, die einen hohen Anteil an Rechenleistung erhalten sollen, eine Kodierparametereinstellung vorgegeben bekommen, die einer hohen Kodierkomplexität entspricht, und umgekehrt. Alternativ zur nachfolgenden Beschreibung kann die den einzelnen Kodiereinrichtungen zugrunde liegende Verarbeitungsplattform dann dazu ausgelegt sein, ihre Verteilung der Gesamtrechenleistung auf der Basis der Kodierparametereinstellungen für die einzelnen Kodiereinrichtungen an dem Ausgang 18 abzuleiten. Weiterhin alternativ beobachtet eine beispielsweise ebenfalls auf der Verarbeitungsplattform implementierte Einrichtung, wie lange eine jeweilige Kodiereinrichtung unter Verwendung der gerade vorgegebenen Kodierparametereinstellung zur Kodierung eines jeweiligen Zeitsegmentes des jeweiligen Informationssignals benötigt, und regelt dementsprechend die Rechenleistungsverteilung nach, um der jeweiligen Kodiereinrichtung die Kodierung der Zeitsegmente ihres jeweiligen Informationssignals in der Zeitdauer der Zeitsegmente bzw. in Echtzeit zu ermöglichen.

Die soeben beschriebenen Ausführungsbeispiele bewirkten in etwa, dass sich für jede Kodiereinrichtung die Kodierkomplexität proportional zu einem zur Verfügung gestellten Rechenleistungsanteil ändert. Dabei stellt die Einstelleinrichtung 16 die Verteilung grundsätzlich so ein, dass ein optimales Verhältnis zwischen zur Verfügung stehender Rechenleistung und Gesamtstörung resultiert.

Die Art der signalabhängigen Informationen 14 kann ebenfalls variieren. Die signallabhängigen Informationen 14, die von allen Informationssignalen abhängen, die zu kodieren sind, können beispielsweise durch eigens vorgesehene Informationssammler mit einem Informationssammler pro Informationssignal, oder, wie in dem Fall der nachfolgend beschriebenen Ausführungsbeispiele, zu einem Teil durch die Mehrzahl von Kodiereinrichtungen zur Kodierung der Mehrzahl von Informationssignalen bereitgestellt werden. Dabei geben die informationssignalabhängigen Informationen 14 vorzugsweise Aufschluss darüber, ob es im Hinblick auf die Gesamtstörung vorteilhaft ist, von einer bestehenden Rechenleistungsverteilung bzw. aktuellen Rechenleistungsverteilung auf eine andere Verteilung überzugehen, d.h. ob hierdurch eine Gesamtstörungsreduzierung bzw. bessere Gesamtstörungsminimierung erhaltbar ist. In Fig. 2 sind beispielsweise Informationssammler 12₁-12_{P} gezeigt, die entweder aus den kodierten Informationssignalen (durchgezogene eingehende Pfeile) oder aus Rekonstruktionen bereits kodierter Zeitabschnitte bzw. Frames der Informationssignale (gestrichelte eingehende Pfeile) die aus der Kodierung mittels der vorgegebenen Kodierparameter resultierende Qualitätsstörung (distortion) ermitteln. Weitere Sammler (nicht gezeigt) können die für ein vorbestimmtes Zeitsegment benötigte Anzahl von Befehlszyklen angeben, was die benötigte Kodierkomplexität anzeigt. Wiederum weitere Sammler (nicht gezeigte) können die für ein vorbestimmtes Zeitsegment resultierende Bitmenge des diesem Zeitsegment entsprechenden Teils des kodierten Informationssignals angeben, was die benötigte Kodierrate oder -menge anzeigt. Wie es Bezug nehmend auf die nachfolgenden Ausführungsbeispiele noch näher beschrieben werden wird, ist es möglich, die Kodiereinrichtungen 11₁-11_{P} jeweils intermittierend im Hinblick auf die Kodierkomplexität mal aufwändigere und mal unaufwändigere Kodierparametereinstellungen ausprobieren zu lassen, um als Teil der signalabhängigen Informationen 14 die sich aus diesem Ausprobieren ergebende Kodierkomplexitätsänderung und Kodierstörungsänderung auszuwerten, welche Auswertung schließlich von der Verteileinrichtung 16 durchgeführt wird.

Es wäre allerdings ebenfalls möglich, dass eine eigens vorgesehene Auswerteroutine in einem Datensammler das ursprüngliche Informationssignal analysiert, um aufgrund des Informationsinhalts dieses Signals selbst auf die Kodierkomplexität des jeweiligen Informationssignals im Allgemeinen zu schließen, und unter Verwendung vorbestimmter Verhältniswerte unter vorbestimmten Kodierparametereinstellungen auch auf die Kodierkomplexität eigener unterschiedlicher Kodierparametereinstellungen bei dem eigenen Informationssignal im Speziellen. So könnte beispielsweise ein solcher Datensammler - für das P-te Informationssignal ist in Fig. 2 ein solcher exemplarisch in gestrichelten Linien gezeigt - ein zu kodierendes Programm untersuchen, um festzustellen, ob es sich um eine aufwändig zu kodierende Videosequenz mit vielen Bewegungsanteilen handelt, wie z.B. bei einer Fußballspielübertragung, oder um eine Videoszene statischen Inhalts, wie z.B. eine Szene mit einem Nachrichtensprecher in einer Nachrichtensendung. Im Gegensatz zu Aussondieren bzw. Ausprobieren anderer Kodierparametereinstellungen als den aktuellen Kodierparametereinstellungen ist es bei dieser Alternative möglich, die Rechenleistungsverteilung durch die Verteileinrichtung 16 nicht basierend auf in der Vergangenheit erhaltenen signalabhängigen Informationen 14 durchzuführen sondern basierend auf aktuellen signalabhängigen Informationen.

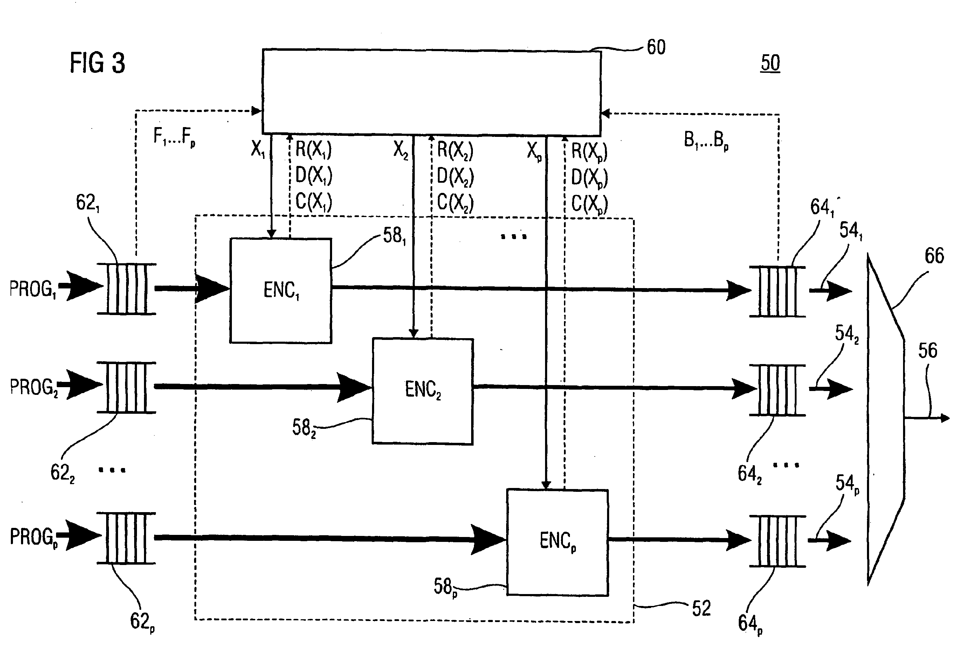

Im Folgenden werden nun Bezug nehmend auf die Fig. 3 - 6 Ausführungsbeispiele beschrieben, bei denen wie im Vorhergehenden angedeutet die situationsabhängigen Informationen, basierend auf welchen die Rechenleistungsverteilung vorgenommen wird, durch intermittierendes "Verstellen" der aktuellen Kodierparameter auf im Hinblick: auf die Kodierkomplexität aufwändigere und/oder unaufwändigere Kodierparametereinstellungen ermittelt werden, im Unterschied zu dem Vorsehen einer parallel zur eigentlichen Kodierung der jeweiligen Informationssignale stattfindenden Analyse dieser Informationssignale, um signalabhängige Informationen zu extrahieren, die Rückschlüsse auf die Kodierkomplexität zulassen bzw. mit ihnen korrelieren. Vor der nachfolgenden Figurenbeschreibug soll dieser Gedanke aber noch in ein Paar einleitenden Worten veranschaulicht werden. Insbesondere ist das im Vorhergehenden skizzierte Aussondieren bzw. Ausloten dazu vorgesehen, den Umstand zu adressieren, dass ein vollständiger Datensatz für D(C,p,s) zunächst einmal zum Zwecke der Störungsoptimierung bzw. Rechenleistungsverteilung aus Gründen der Komplexität nicht verfügbar ist. Natürlich wäre es möglich, jedes Segment und Programm mit mehreren Optimierungspegeln bzw. Kodierkomplexitätspegeln zu kodieren. Dies würde jedoch mehr Komplexität erfordern, als anschließend für die eigentlich Kodierung erforderlich ist. Stattdessen erzielen es die nachfolgenden Ausführungsbeispiele, diese Daten während der Kodierung der Mehrzahl von zu kodierenden Informationssignalen bzw. Programmen ohne zu viel Aufwand zu schätzen. Als Beispiel aus der Videokodierung weisen beispielsweise B-Frames ein besseres RD-Verhalten auf als P-Frames, wobei dieselben allerdings auch komplexer zu kodieren sind. Folglich wird gemäß dem nachfolgenden Ausführungsbeispiel die Schätzung dadurch durchgeführt, dass beispielsweise mit einem vorbestimmten Intervall in jedem Programm B-Frames kodiert werden, um den Gewinn schätzen zu können, der sich hieraus im Hinblick auf die Kodierstörung relativ zu der Komplexitätserhöhung ergibt, d.h. das Verhältnis dD/dC. Extra-B-Frames können dann beispielsweise in dasjenige Programm eingefügt werden, das am meisten von der zusätzlichen Verarbeitungsleistung profitiert. Eine weitere Möglichkeit bestünde darin, für ein bestimmtes Programm einen höheren Optimierungspegel für einen bestimmten Prozentsatz der Frames zu verwenden, wie z.B. um zu sehen, wie die Auswirkung von Mehrfachreferenzframes ist, wie es beispielsweise beim H.264/AVC-Standard möglich ist. Die Schätzung von D(C,p,s) nach den nachfolgenden Ausführungsbeispielen umfasst nun also das "Testen" oder "Aussondieren" der Verarbeitungsplattform, auf denen die Kodiereinrichtungen implementiert sind, mit erhöhten Optimierungspegeln oder komplexeren Kodierwerkzeugen, wie z.8. den oben erwähnten B-Frames. Aus diesem Grunde liegt die Verarbeitungsleistung zumindest manchmal oberhalb eines ansonsten vorliegenden durchschnittlichen Leistungspegels. In dem Falle eines einzelnen Kodierers würde diese erhöhte Komplexität unter strikten Echtzeitbedingungen zu ernsthaften Problemen führen, da das aktuell kodierte Frame zu spät den Kodierer verlassen und beispielsweise seinen vorgesehenen Übertragungszeitpunkt versäumen würde, während es immer noch kodiert wird. Bei der Kodierung mehrerer Programme auf einer einzigen Verarbeitungsplattform wie es bei dem vorhergehenden Ausführungsbeispiel und dem folgenden Ausführungsbeispiel der Fall ist, kann jedoch die Zusatzbelastung, die sich durch das "Aussondieren" ergibt, unter den Programmen ausgeglichen bzw. verteilt werden, derart, dass lediglich beispielsweise eines der Programme zur Aussondierungszwecken eine höhere Komplexität aufweist, während alle anderen Programme die durchschnittliche Komplexität aufweisen.

Um dies zu veranschaulichen, sei beispielsweise angenommen, dass B-Frames die doppelte Komplexität von P-Frames erforderten. Daraus folgt, dass, wenn lediglich eines der P-Programme ein B-Frame zu jedem beliebigen Zeitpunkt kodiert, die Verarbeitungslast verglichen zu der Kodierung von lediglich P-Frames um lediglich P+1/P erhöht ist. Folglich erhöht das Kodieren von B-Frames mit einer Wiederholzeitdauer von P Zeiteinheiten bzw. Zeitsegmenten in jedem Programm die Gesamtkomplexität lediglich leicht, während die Aussondierung der Verarbeitungsplattform und die Schätzung von dD/dC eine optimerte Aufteilung der Gesamtkomplexität ermöglicht.

Variationen des Optimierungspegels bzw. der Kodierparametereinstellung kann dabei abweichend von den bisher gelieferten und den im Folgenden gelieferten Bespielen auch auf einer feiner oder gröberen Granularitätsebene durchgeführt werden als Frames, wie z.B. auf Slice-Ebene.

Zudem soll in Vorbereitung auf die nachfolgende Beschreibung noch ein Aspekt der nachfolgenden Ausführungsbeispiele hervorgehoben werden, der sich mit der Echtzeitnebenbedingung beschäftigt. Wie im Vorhergehenden bereits kurz angesprochen sollten die Informationssignale schnell genug kodiert werden, so dass sie in Echtzeit kodiert werden können bzw. die kodierten Datenströme in Echtzeit ausgegeben werden können. Anders ausgedrückt sind die zu kodierenden Informationssignale beispielsweise in Zeitsegmente unterteilt, wie z.B. Frames bzw. Bilder in dem Fall von Videosignalen und Frames in dem Fall von Audiosignalen, und gemäß einer strikten Echtzeitbedingung müsste die Kodierung der mehreren Informationssignalen für jedes Informationssignal innerhalb jedes dieser Zeitsegmente schnell genug sein, um die Kodierung des entsprechenden Segments innerhalb der Zeitdauer des entsprechenden Segmentes durchzuführen. Diese strikte Echtzeitbedingung wird bei den nachfolgenden Ausführungsbeispielen aufgeweicht, und zwar durch das Vorsehen eingangsseitiger Zwischenspeicher. Durch dieses Aufweichen der Echtzeitbedingung wird auch die Schätzung von D(C,p,s) weiter vereinfacht, da es in diesem Fall möglich ist, mehrere unkodierte Frames noch vor ihrer Kodierung bzw. noch vor der jeweiligen Kodiereinrichtung auf beispielsweise eine FIFO- (first in first out = zuerst hinein zuerst hinaus) Art und weise zwischenzuspeichern. Die unkomprimierten Roh-Frames können in die FIFOs mit einer gegebenen Framerate, wie z.B. 25 Hz wie in dem Fall der Videokodierung, eingegeben werden, wobei die entsprechende Kodiereinrichtung die Frames dem entsprechenden FIFO während der Kodierung entnimmt. Wenn also die Kodiereinrichtung in einem augenblicklichen Frame mehr Kodieraufwand betreiben muss als erwartet, dann wird der Speicherinhalt in dem Zwischenspeicher bzw. FIFO wachsen. Dann ist aber die Kodiereinrichtung in der Lage, durch eine Reduktion des Optimierungspegels bzw. einer Reduktion der Komplexität der Kodierung einige nachfolgende Frames schneller zu kodieren, um auf diese Weise die Speichermenge in dem FIFO zu reduzieren und somit wieder "Zeit gut zu machen". Folglich ermöglichen die nachfolgenden Ausführungsbeispiele durch das Vorsehen eines FIFOs für Roh-Frames vor der jeweiligen Kodiereinrichtung eine zusätzliche Flexibilität in Bezug auf die Lastenverteilung bzw. Rechenleistungsverteilung über die Zeit hinweg. Durch diese zusätzliche Flexibilität kann sich auch noch ein zusätzlicher Vorteil im Hinblick auf die Gesamtstörungsoptimierung ergeben. Bei einigen Anwendungen ist die eingeführte Extraverzögerung durch das Vorsehen des FIFOs sehr gut akzeptierbar, z.B. dann, wenn das Übertragungsschema zur nachfolgenden Übertragung des gemultiplexten Kodierstromes aus den kodierten Informationssignalen ohnehin eine Verzögerung einführt, wie es beispielsweise bei dem Zeitmultiplexbetrieb mittels der Zeitschlitze bei einer DVB-H-Übertragung der Fall ist.

Im Folgenden wird zunächst auf Fig. 3 Bezug genommen. Fig. 3 zeigt ein System 50 zur Kodierung einer Mehrzahl von Informationssignalen bzw. Programmen unter Verwendung einer gemeinsamen durch eine Verarbeitungsplattform 52 zur Verfügung gestellten Rechenleistung sowie hier exemplarisch zur anschließenden Überführung der resultierenden kodierten Informationssignale in ein gemeinsames gemultiplextes Informationssignal für eine Übertragung auf einem gemeinsamen Übertragungskanal, wie z.B. mittels DVB-H.

Das System 50 ist insbesondere dazu vorgesehen, eine Mehrzahl von P mit P > 1 Programmen PROGₚ mit p = 1, ... , P zu kodieren, und die entstehenden kodierten Informationssignale 54₁ - 54_{P} in einen gemeinsamen kodierten Datenstrom 56 zu überführen. Dazu umfasst das System 50 P Kodiereinrichtungen 58₁ bis 58_{P} bzw. ENC₁ bis ENCp, die auf der Verarbeitungsplattform 52 implementiert sind, wie z.B. als Softwareprogramme, die auf der Plattform 52 lauffähig sind, sowie eine Steuerung 60 zur Steuerung der Mehrzahl von Kodiereinrichtungen 58₁ - 58_{P}, die insofern eine speziellere Ausgestaltung für das Ausführungsbeispiel von Fig. 2 darstellt. Ferner umfasst das System 50 jeweils einen eingangsseitigen, einem Eingang eines jeweiligen der Kodiereinrichtungen 58₁ - 58_{P} vorgeschalteten Zwischenspeicher 62₁ bis 62_{P} pro Kodiereinrichtung 58₁ - 58_{P} sowie pro Kodiereinrichtung 58₁ - 58_{P} einen ausgangsseitigen, sich an einen Ausgang einer jeweiligen Kodiereinrichtung 58₁ - 58_{P} anschließenden Zwischenspeicher 64₁ - 64_{P} und einen Multiplexer 66, der hier exemplarisch eine Zeitmultiplexierung des sich an einem Ausgang der ausgangsseitigen Zwischenspeicher 64₁ - 64_{P} bereitgestellten kodierten Informationssignale 54₁ - 54_{P} vornimmt und hierzu mit den Ausgängen dieser Zwischenspeicher 64₁ - 64_{P} eingangsseitig verbunden ist, um an seinem Ausgang einen gemultiplexten gemeinsamen Kodierdatenstrom 56 auszugeben. Dabei sei jedoch bereits jetzt darauf hingewiesen, dass die Weiterverarbeitung der kodierten Informationssignale 54₁ - 54_{P} durch den Multiplexer 66 nur der Veranschaulichung dient und andere Verarbeitungsmöglichkeiten natürlich ebenfalls existieren.

Die Steuerung 60 ist mit jeder der Kodiereinrichtungen 58₁ - 58_{P} gekoppelt, um jeder Kodiereinrichtung 58₁ - 58_{P} die Verwendung eines bestimmten Kodierparametersatzes X₁ - X_{P} vorschreiben bzw. vorgeben zu können, sowie um von jeder Kodiereinrichtung 58₁ - 58_{P} als signalabhängige Information augenblickliche Werte einer sich unter Verwendung des vorgeschriebenen Kodierparametersatzes X₁ bis X_{P} ergebenden Kodierrate, nämlich R(X_{P}), Kodierstörung bzw. Verzerrung (distortion), nämlich D(X_{P}), und Komplexität, nämlich C(X_{P}), zu erhalten, wobei in Fig. 3 dabei davon ausgegangen wird, dass sich hierzu in den Kodiereinrichtungen entsprechende Datensammler (in Fig. 3 nicht gezeigt, aber vgl. Fig. 2) in denselben befinden, die die Informationen bestimmen. Zudem ist jeder Zwischenspeicher 62₁ - 62_{P} und 64₁ - 64_{P} mit der Steuerung 60 gekoppelt, um derselben mittels eines entsprechenden Füllstand-Signals signalisieren zu können, dass der entsprechende Zwischenspeicher dazu tendiert, voll bzw. leer zu werden, wie z.B. einen bestimmten Füllgrad überschritten hat, oder sogar den Füllgrad selbst mitteilen zu können.

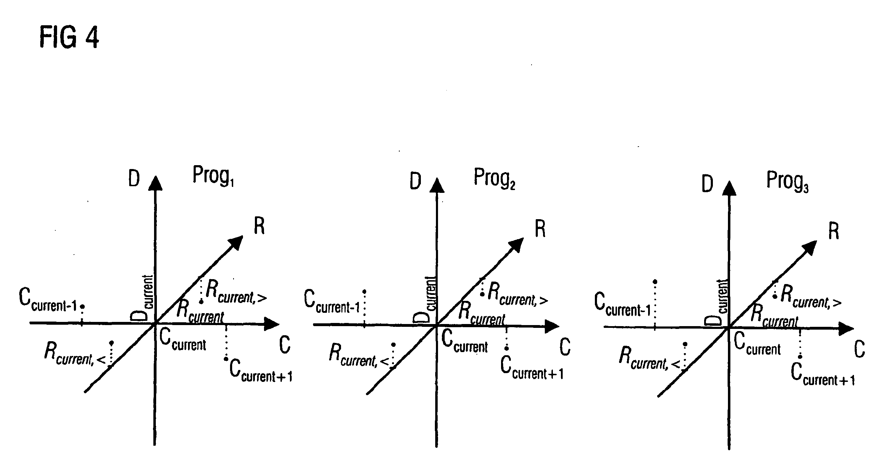

Nachdem im Vorhergehenden der Aufbau des Systems 50 beschrieben worden ist, wird im Folgenden unter zusätzlicher Bezugnahme auf die Fig. 4 - 6 die Funktionsweise desselben beschrieben.

Die mehreren Programme PROG₁ - PROG_{P} erreichen über die jeweiligen Zwischenspeicher 62₁ - 62_{P}, wo sie zwischengespeichert werden, eine jeweilige der Kodiereinrichtungen 58₁ - 58_{P}, durch welche sie kodiert bzw. komprimiert werden. Dabei sind die Kodiereinrichtungen 58₁ - 58_{P} wie zuvor erwähnt auf der Verarbeitungsplattform 52 implementiert, die es ermöglicht, die durch dieselbe zur Verfügung gestellte Verarbeitungsleistung dynamisch unter den Kodiereinrichtungen 58₁-58_{P} zu verteilen, wie es durch die Steuerung 60 Wahl von X₁ - X_{P} möglich ist. Beispielsweise sind die Kodiereinrichtungen 58₁ - 58_{P} als ein jeweiliges Softwareprogramm implementiert, und die Plattform 60 weist denselben gemäß den Vorgaben X₁-X_{P} jeweils einen unterschiedlichen und zeitlich variablen Betriebsmodus zu, der im Verbrauch in mehr oder weniger Befehlszyklen resultiert. Fallen weniger Befehlszyklen an, so ist die entsprechende Kodereinrichtung noch vor dem Ende eines Zeitsegmentes fertig und wartet, bis das nächste Zeitsegment beginnt, so dass in der verbleibenden Zeit des aktuellen Zeitsegmentes die anderen Kodiereinrichtungen die Rechenleistung nicht mehr mit dieser Kodiereinrichtung teilen müssen usw.

Die Steuerung 60 kümmert sich nun um die gemeinsame Kodierung der Programme PROG₁ - PROG_{P}, indem sie beispielsweise für jede Kodiereinrichtung 58₁ - 58_{P} die zu verwendenden Kodierparameter bzw. den zu verwendenden Kodierparametersatz einstellt, d.h. den Parametersatz X₁ für die Kodiereinrichtung 58₁, den Kodierparametersatz X₂ für die Kodiereinrichtung 58₂ usw. Die Kodierparameter können dynamisch über die Zeit hinweg geändert werden, wie z.B. in Einheiten von bzw. zwischen Zeitsegmenten. Um bei dem vorliegenden Beispiel der Videokodierung zu bleiben, können die Kodierparameter beispielsweise eine bei der Kodierung zu verwendende Quantisierungsschrittweite Q, einen zu verwendenden Frame-Typ, wie z.B. Intra- bzw. I-, prädikatives bzw. P- oder biprädiktives bzw. B-Frame, einen bei einer Bewegungsschätzung maximalen Suchraum zur Erkennung einander zugehöriger Bildbestandteile in einem aktuellen Bild und einem Referenzbild, eine Anzahl zu verwendender Referenzframes, die für die Bewegungsschätzung zu durchsuchen sind, einen Modusentscheidungsalgorithmus, wie z.B. eine Anzahl von bei der Kodierung wählbaren Makroblock- oder Transformationsblockmodi, eine Suchtiefe für die Modusentscheidung, usw. einstellen. Die Kodiereinrichtungen sind dazu beispielsweise hybride Videokodierer zur Kodierung mittels bewegungskompensierter Prädiktion und beispielsweise transformationsbasierter und/oder verlustbehafteter Restsignalkodierung, d.h. Kodierung des Restes zu der Rekonstruktion eines bewegungskompensierten Frames.

Die Entscheidung, welche Kodierparameter X₁ - X_{P} für die Kodiereinrichtungen 58₁ - 58_{P} vorgeschrieben werden, hängt auf die im Folgenden beschriebene Art und Weise von den auswertbaren Informationen ab, also insbesondere den informationssignalabhängigen Informationen R(Xₚ), C(Xₚ) und D(Xₚ) sowie den Füllstandsinformationen der Zwischenspeicher 62₁ - 62ₚ und 64₁ - 64ₚ.

Wird nun eine der Kodiereinrichtungen 58ₚ mit 0<p≤P mit einem bestimmten Kodierparametersatz Xₚ angesteuert, so resultiert daraus aufgrund der augenblicklichen Beschaffenheit des entsprechenden zu kodierenden Informationssignals bzw. des Programms PROGₚ eine bestimmte Kodierkomplexität C(Xₚ), Bitrate R(Xₚ) und eine durch die Kodierung hervorgerufene Störung bzw. Verzerrung D(X_{P}), welche Werte somit signalabhängig sind und sich über die Zeit hinweg ändern und wie im Vorhergehenden erwähnt der Steuerung 60 als signalabhängige Informationen zur Verfügung gestellt werden.

Die Steuerung 60 versucht nun beispielsweise, die Kodierparameter X₁ - Xₚ für die Kodiereinrichtungen 58₁ - 58ₚ, soweit dies die durch die Plattform 52 zur Verfügung gestellte Rechenleistung zulässt, auf die jeweils optimalen Kodierparametersätze einzustellen. Allerdings fehlt ihr hierzu im Normalfall die Information D(C,p,s) für das jeweilige Programm p und derzeitige Segment s. Im Folgenden wird von dem Fehlen dieser Information ausgegangen. Deshalb testet gemäß vorliegenden Ausführungsbeispiel die Steuerung 60 die Möglichkeit einer Verbesserung der durch die Kodierung der Programme PROG₁ - PROGₚ in denselben hervorgerufenen Gesamtstörung dadurch aus, dass sie zu jedem Zeitsegment jeweils eine Kodiereinrichtung 58₁ - 58ₚ mit einem anderen Kodierparametersatz ansteuert, der entweder einer höhere Komplexität erwarten lässt oder eine niedrigere Komplexität erwarten lässt als derjenige Kodierparametersatz, der aktuelle verwendet worden ist bzw. aktuell verwendet worden wäre, um gemäß einer vorbestimmten Optimierungsregel eine minimale Gesamtstörung zu erhalten. Auf diese Weise testet die Steuerung 60 die Kodiersituation an den einzelnen Kodiereinrichtungen 58₁ - 58ₚ intermittierend aus, um festzustellen, ob es lohnenswert ist, von den aktuellen Kodierparametersätzen abweichend eine andere Kodierkomplexitätsverteilung und dementsprechend eine andere Rechenleistungsverteilung zu wählen.

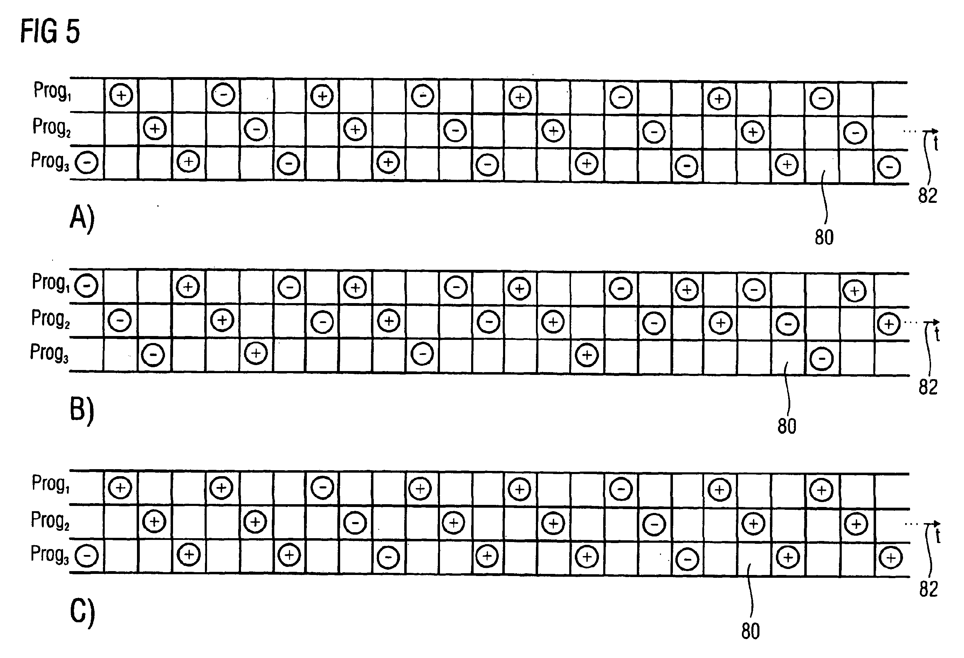

Um dies zu veranschaulichen, wird im Folgenden auf Fig. 5a - 5c Bezug genommen. Fig. 5a - 5c zeigen exemplarisch für drei Programme die Aufteilung derselben in Zeitsegmente 80. Die Zeitsegmente 80 sind als Kästchen dargstellt, wobei die Kästchen 80 für ein jeweiliges Programm PROG₁-PROG₃ jeweils horizontal in einer Zeitachsenrichtung 82 nebeneinander angeordnet dargestellt sind. Den zeitlich aufeinander folgenden Zeitsegmenten 80 eines jeweiligen Programms gehören, wie es zu sehen ist, sowohl solche an, in denen ein "+"- oder "-"-Zeichen eingezeichnet ist, als auch solche, in denen kein Zeichen vorgesehen ist, sondern die leer sind. Die verschiedenen Zeitsegmente 80 in Fig. 5a - 5c sollen dabei anzeigen, ob der zur Kodierung des entsprechenden Zeitsegments 80 zugrunde liegende und durch die Steuerung 60 vorgegebene Kodierparametersatz X zum Aussondieren der Kodiersituation des entsprechenden Programms dient oder nicht. Insbesondere stellen Zeitsegmente 80 mit einem "Plus"-Zeichen Zeitsegmente dar, für die die Steuerung 60 der entsprechenden Kodiereinrichtung einen Kodierparametersatz vorgibt, der zum Austesten einer im Hinblick auf die Kodierkomplexität aufwändigeren als der zur optimierten Gesamtstörung führenden Kodierung dient, während Zeitsegmente 80 mit einem "-"-Zeichen Zeitsegmente andeuten sollen, für deren Kodierung-die Steuerung 60 der entsprechenden Kodiereinrichtung einen Kodierparametersatz vorgibt, damit eine im Hinblick auf die Kodierkomplexität weniger aufwändigere Kodierung ausgetestet wird. Die übrigen Zeitsegmente 80 ohne ein eingezeichnetes Plus/Minus-Zeichen stellen Zeitsegmente dar, für deren Kodierung die Steuerung 60 der entsprechenden Kodiereinrichtung einen Kodierparametersatz vorgibt, der der gerade aktuellen ermittelten optimierten Komplexitäts- bzw. Rechenleistungsverteilung entspricht.

Bevor nun anhand der Fig. 5a - 5c verschiedene Beispiele des Austestens der Kodiersituationen der Programme durch die Steuerung 60 diskutiert werden, wird darauf hingewiesen, dass in diesen Figuren lediglich exemplarisch die Zeitsegmente 80 der Programme zeitlich so angeordnet sind, dass die Zeitsegmente 80 zueinander synchron angeordnet sind. Das muss allerdings nicht sein. Auch ist es nicht notwendig, dass die Zeitsegmente jedes Programms eine konstante Länge aufweisen oder unter den Programmen gleich sind. In dem vorliegenden Fall jedoch wurde zur Vereinfachung des Verständnisses von einer solchen Konfiguration ausgegangen, weshalb im Folgenden auch der Ausdruck Zeitsegment in einem zeitlichen Sinne verwendet wird, nämlich in dem Sinne eines Zeitabschnitts entlang der Zeitachse 82, in dem jeweils ein Zeitsegment 80 der jeweiligen Programme befindlich ist.

Auf diese Weise zeigt nun Fig. 5a ein Beispiel für ein Austesten der Kodiersituation der unterschiedlichen Programme, nach welchem innerhalb jedes Programms mit einer festen Zeitintervalllänge abwechselnd mal im Hinblick auf die Kodierkomplexität aufwändigere und weniger aufwändigere Kodierparametersätze ausgetestet werden. Die Zeitintervalllänge beträgt dabei exemplarisch 2 * P bzw. in dem vorliegenden Fall 2 * 3 = 6 Zeitsegmente, wobei das intermittierende Austesten in den Programmen derart stattfindet, dass zu jedem Zeitsegment nur eines der Programme getestet wird.

Auch bei dem Ausführungsbeispiel von Fig. 5b wird zu jedem Zeitpunkt nur die Programmsituation auf einem der Programme getestet. Ferner findet innerhalb jedes Programms wieder das Austesten abwechselnd statt, d.h. einmal mit einem Kodierparametersatz für eine komplexere Kodierung und das nächste Mal mit einem Kodierparametersatz für eine weniger komplexe Kodierung. Allerdings sind bei dem Beispiel von Fig. 5b die Abstände zwischen den Austestzeitsegmenten nicht konstant. Vielmehr sorgt die Steuerung 60 bei dem Beispiel von Fig. 5b dafür, dass Programme häufiger ausgetestet werden, die mit einer höheren Wahrscheinlichkeit erwarten lassen, dass sich bei ihnen ein Wechsel auf eine komplexere oder weniger komplexe Kodierung lohnt.

Bei dem Beispiel von Fig. 5c wird ebenfalls lediglich ein Programm pro Zeitpunkt bzw. Zeitsegment ausgetestet. Auch die Abstände des Austestens innerhalb eines Programms sind konstant wie in dem Fall von Fig. 5a. Allerdings erfolgt in Fig. 5c das Muster des Austestens einer- komplexeren und weniger komplexen Kodierung nicht abwechselnd wie in dem Fall von Fig. 5a sondern asymmetrisch, und zwar in dem Fall von Fig. 5c exemplarisch derart, dass doppelt so oft eine komplexere Kodierung ausgetestet wird als eine weniger komplexe.

Es sei darauf hingewiesen, dass die Beispiele aus Fig. 5a - 5c lediglich eine nichtabschließende Auflistung von Möglichkeiten darstellen, wie ein Austesten der Kodiersituation auf dem PROG₁ - PROGₚ durchgeführt werden kann. Wie es folgenden dargelegt wird, ist durch entsprechende Maßnahmen beispielsweise ebenfalls möglich, nur komplexere Kodierparametersätze auszuprobieren.

Jedenfalls erhält die Steuerung 60 durch das Aussondieren signalabhängige Informationen, die sie verwenden kann, um zu entscheiden, ob es lohnenswert ist, von einer augenblicklichen Kodierparametereinstellung für die einzelnen Kodiereinrichtungen 58₁ - 58ₚ abzugeben, oder nicht. Um dies zu veranschaulichen, werde beispielsweise auf Fig. 4 Bezug genommen. Fig. 4 zeigt ein Beispiel für die signalabhängigen Informationen, die die Steuerung 60 aus den RDC-Werten von den Kodiereinrichtungen 58₁ - 58ₚ hier exemplarisch für P = 3 verwendet, um zu entscheiden, ob sich ein Wechsel von einer augenblicklichen Kodierparametereinstellung für eine jeweilige Kodiereinrichtung zu einem anderen Kodierparametersatz lohnt oder nicht. Insbesondere zeigt nämlich Fig. 4 für jedes der hier exemplarisch drei Programme einen dreidimensionalen Graphen; entlang dessen Achsen C, R und D aufgetragen sind, wobei der Ursprung des Koordinatensystems bei (C_{current}, Rcurrent und Dcurrent) liegt. Anders ausgedrückt, liegt der Ursprung jedes Graphen des jeweiligen der in Fig. 4 exemplarisch drei Programme an dem RDC-Punkt der sich bei dem letzten Zeitsegment des entsprechenden Programms in einer Nicht-Test-Situation ergeben hat (in einem Zeitsegment 80 ohne Puls/Minus-Zeichen in Fig. 5a - c). Die Komplexität C_{current} für die einzelnen Programme wurde durch die Steuerung 60 somit bisher als eine optimale Aufteilung der Komplexität und damit der Rechenleistung bestimmt. In jedem Graphen sind nun weitere RDC-Punkte eingezeichnet, die in Fig. 4 exemplarisch entweder die Komponente R_{current} oder die Komponente C_{current} mit dem Koordinatenursprung gemeinsam haben. Die RDC-Punkte mit R = R_{current} sind durch die jeweilige Kodiereinrichtung bei den letzten Zeitsegmenten 80 erhalten worden, an dem zuletzt ein anderer Kodierparametersatz verwendet worden ist, als für (C_{current}, Rcurrent und D_{current}) vorlag, und zwar ein Parameter in einem Kodierparametersatz, der zu einer erhöhten Komplexität führt, nämlich C_{curren+1} (Kästchen mit "Plus"-Zeichen in Fig. 5a - c) und das andere Mal mit einem Kodierparametersatz, der zu einer geringeren Kodierkomplexität führt, nämlich C_{curren-1} (Kästchen mit "Minus"-Zeichen in Fig. 5a - 5c). Die anderen zwei Punke in dem jeweiligen Graphen erhält die Kodiereinrichtung 60 gemäß dem vorliegenden Ausführungsbeispiel in jedem Zeitsegment 80 dadurch, dass exemplarisch die Kodiereinrichtungen 58₁ - 58ₚ ausgelegt sind, um zur optimalen Kodierung des jeweiligen Programms auch unterschiedliche Kodierraten auszutesten, um eine RD-Optimierung durchzuführen. In Fig. 4 entsprechen folglich die zwei Stützpunkte mit C = C_{current} RDC-Tupeln die sich nicht tatsächlich bei einer Kodierung der Informationssignale bzw. Programm bei einer Kodierung der Informationssignale bzw. Programme PROG₁ - PROGₚ ergeben hat, dessen Kodierergebnis für die kodierten Informationssignale bzw. kodierten Programme 54₁ - 54ₚ verwendet worden ist. Alternativ wäre es natürlich möglich, auch diese Stützpunkte durch ein tatsächliches Austesten zu ermitteln, wie es Bezug nehmend auf Fig. 5a - 5c für eine Komplexitätsveränderung beschrieben worden ist.

Aufgrund der vier Stützpunkte für jedes der Programme kann nun die Steuerung 60 entscheiden, ob es sich in einer gegenwärtigen Situation lohnt, die Kodierparametereinstellungen der einzelnen Programme zu verändern, was der Fall sein kann, wenn die Störungsreduktion ΔD durch eine entsprechende Komplexitätserhöhung ΔC oder Ratenerhöhung ΔR bedeutender ist als die damit verbundene Störungserhöhung ΔD, die sich ergibt, wenn die entsprechende Kodierkomplexität ΔC bzw. Kodierrate ΔR in einem der anderen Programme reduziert wird.

Bezug genommen auf Fig. 4 wird darauf hingewiesen, dass auch hier die Darstellung von Fig. 4 nur der Veranschaulichung dient. So zeigt zwar Fig. 4, dass die Steuerung 60 pro Programm vier zu der aktuellen unterschiedliche Kodierparametereinstellungen bzw. die dazugehörigen sich ergebenden RDC-Tupel verwendete, um für das nächste Zeitsegment die optimale Kodierparametereinstellung und damit auch die Verteilung der Kodierkomplexität unter den Programmen zu bestimmen, aber die Anzahl kann hiervon auch verschieden sein. Zudem ist das Ausführungsbeispiel von Fig. 4 dahingehend vereinfacht, dass in Fig. 4 davon ausgegangen worden ist, dass die alternativen Kodierparametereinstellungen der vier außerhalb des Ursprunges liegenden RDC-Stützpunkte sich nur in zwei der drei Koordinaten von dem Ursprung unterscheiden. Das muss ebenfalls nicht der Fall sein. Es ist beispielsweise möglich, dass jeder Kodierparametersatz Xₚ einen Satz von Kodierparametern xᵢ umfasst, nämlich {x₁, ..., Xₙ}, von denen jeder Parameter xᵢ Element einer jeweiligen Menge Xⁱ möglicher Kodierparameter sind, also Xₚ ∈ {X⁰, X¹, X², ... X^{N}} gilt. Daraus resultieren mögliche Kodierparametereinstellungen X(j) mit 0<j≤z aus der Menge M von Kodierparametersätzen {X(1),...,X(z)} ∈ {X⁰, X¹, X², ... X^{N}}, die in eine Reihenfolge gebracht werden können, so dass die Kodierkomplexität für X(r) mit r ∈ {1, ..., z-1} kleiner ist als für X(r+1). Innerhalb einer solchen Menge M wählt dann die Steuerung 60 beispielsweise die jeweils zu verwendende Kodierparametereinstellung für die jeweilige Kodiereinrichtung aus, so dass ausgehend von einer aktuellen Kodierparametereinstellung X(m) die Kodierparametereinstellung für einen der Kodiersituationstests auf die Kodierparametereinstellung X(m-1) für eine geringere Kodierkomplexität und X(m+1) für eine höhere Kodierkomplexität verstellt wird.

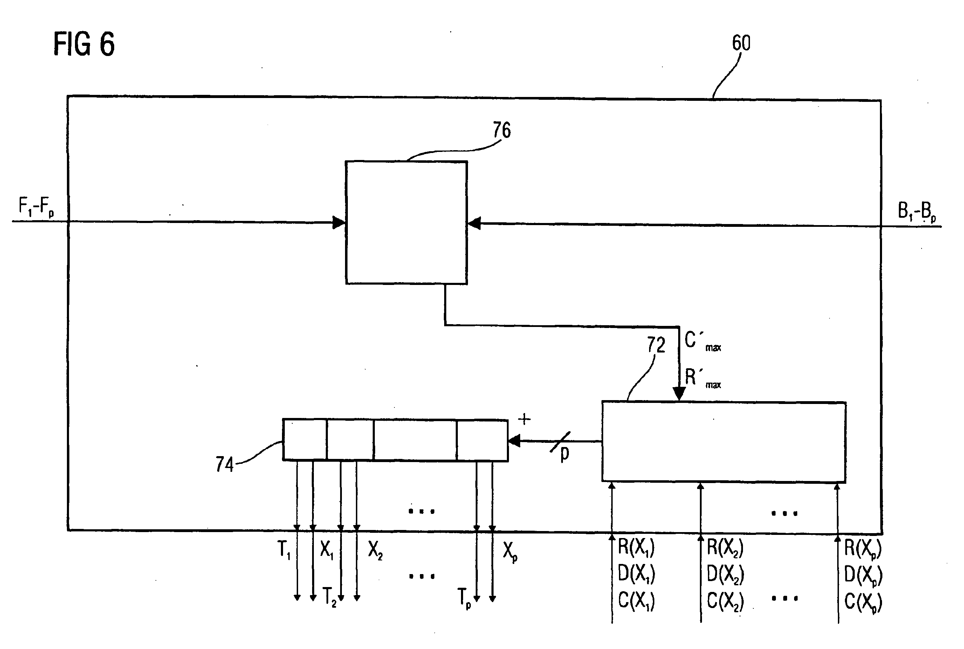

Die bisher beschriebene Funktionsweise der Steuerung 60 des Systems 50 wird nun noch einmal detaillierter Bezug nehmend auf Fig. 6 erläutert. Nach Fig. 6 umfasst die Steuerung 60 zur Optimierung der gemeinsamen Kodierung eine Optimierungseinrichtung 72 auf, die basierend auf den RDC-Tupeln von den Kodiereinrichtungen 58₁ - 58ₚ entscheidet, ob eine bessere Gesamtstörung durch Wechsel auf andere Kodierparametereinstellungen möglich ist. In anderen Worten ausgedrückt führt die Optimierungseinrichtung 72 eine Optimierung der Kodierparameter auf der Basis der RDC-Werte durch. Genauer ausgedrückt wählt sie unter den zur Verfügung stehenden Möglichkeiten für Kombinationen von P RDC-Tupeln, nämlich einem für jede Kodiereinrichtung p (0<p<=P), die zu unterschiedlichen Kodierparameterausprägungen der Kodierparameter X₁-X_{P} gehören, diejenige aus, die zu einer minimalen Gesamtstörung, wie z.B. minimalen Summe der Einzelstörungen D₁+...+Dₚ, führt, und zwar bei Einhaltung der Nebenbedingungen, dass die zur Übertragung zur Verfügung stehende maximale Gesamtrate Rₘₐₓ nicht durch die Summe der entsprechenden Einzelraten R₁+...+Rₚ und die aufgrund der zur Verfügung stehenden gemeinsamen Rechenkomplexität maximal in der Zeit eines Zeitsegmentes abarbeitbare Gesamt komplexität Cₘₐₓ nicht durch die Summe der Einzelkomplexitäten C₁+...+Cₚ überschritten wird. Die Nebenbedingungen mit den Parametern Rₘₐₓ und Cₘₐₓ werden aufgrund der eingangs- und ausgangsseitigen Puffer etwas gelockert, wie es im folgenden beschrieben wird. In anderen Worten ausgedrückt, ist die Steuereinrichtung 60 dazu da, die Kodierparameter X so einzustellen, dass die gewünschte Rechenleistungsverteilung resultiert.

Beispielsweise sei angenommen, dass die aktuell verwendete Kodierparametereinstellung für die Kodiereinrichtungen 58₁ - 58ₚ, die also für das letzte Zeitsegment gültig war, durch {X₁ = X (a₁), X₂ = X (a₂), ... , Xₚ = X (aₚ)} mit a₁ ... aₚ ∈ {1 ... z} gegeben ist. Zu all diesen Kodiereinstellungen besitzt die Einrichtung 72 Kenntnis über ein entsprechendes RDC-Tupel. Ferner erhielt die Einrichtung 72 pro Programm p jeweils ein RDC-Tupel zu einer oder mehreren Testkodierparametereinstellungen Xₚ = X (bₚ) mit bₚ≠ aₚ. Dann prüft die Einrichtung 72 der Steuerung 60, welche der möglichen Kombinationen von Kodierparametereinstellungen für die einzelnen Programme p unter der aktuellen X (a_{P}) und der bzw. den alternativen X (bₚ) zu einer kleineren bzw. minimierten Gesamtstörung führt, beispielsweise also zu einer Minimierung der Summe der Ds der entsprechenden RDC-Tupel. Dabei wird die Einrichtung 72 die Nebenbedingung, dass die Kapazitäten C dieser RDC-Tupel in Summe die Gesamtleistung der Plattform 52 nicht überschreiten dürfen, berücksichtigen. Wie noch genauer erläutert wird, kann die Einhaltung der Nebenbedingung jedoch durch die Verwendung von Zwischenpuffern zeitlich entschärft werden. Zudem kann die Einrichtung 72 eine weitere Nebenbedingung berücksichtigen, nämlich die, dass die Summe der R-Werte eine maximale Gesamtkodierrate nicht überschreiten soll, die durch den Übertragungskanal bestimmt ist, über den das gemeinsame kodierte Signal 56 übertragen werden soll, und zwar entweder zusätzlich oder alternativ zu der Nebenbedingung, dass die Summe der Komplexitätswerte C nicht größer als die Komplexität sein soll, zu deren Abarbeitung innerhalb der Zeitdauer eines Zeitsegmentes die gemeinsame Rechenleistung der Plattform 52 in der Lage ist.

Der durch die Einrichtung 72 ausgeführte Optimierungsvorgang kann zu einer Umstellung einer oder einzelner der aktuellen Kodierparametereinstellungen X (aₚ) zu einer jeweiligen der Testkodierparametereinstellungen X (bₚ) führen. Diese Umstellung kann eine Kodierkomplexitätserhöhung oder -verringerung verglichen zu der aktuellen Kodierkomplexität der aktuellen Kodierparametereinstellung X (a_{P}) bedeuten.

In Fig. 6 ist beispielsweise angedeutet, dass die Optimiereinrichtung 72 ein Register 74 der Steuerung 60 entsprechend umstellt, in welchem jeweils die aktuellen Kodierparametereinstellungen X (aₚ) für die einzelnen Kodiereinrichtungen 58₁ - 58ₚ gehalten werden. Beispielsweise steuert die Einrichtung 72 das Register 74 an, um X(aₚ) auf X (bₚ) umzustellen.

Nun sind, wie im Vorhergehenden angedeutet, vor und nach jeder Kodiereinrichtung 58₁ - 58ₚ Frame-Zwischenspeicher 62₁ - 62ₚ bzw. Bit-Zwischenspeicher 64₁ - 64ₚ vorgesehen, um Schwankungen in der Komplexität bzw. Bitrate zu absorbieren, die beispielsweise daher herrühren, dass die Optimierungseinrichtung 72 die Optimierung zwar unter Berücksichtigung der oben erläuterten Nebenbedingungen aber eben auf der Basis vergangener RDC-Tupel also Schätzungen für die aktuellen, tatsächlichen RDC-Tupel durchführt. Weichen die RDC-Werte nach der tatsächlichen Kodierung von den geschätzten RDC-Werten ab, so kann die Abweichung im Puffer absorbiert und durch eine Regelschleife im nächsten Optimierungsschritt korrigiert werden.

Für diese Funktion weist dann die Steuerung 60 gemäß Fig. 6 eine entsprechende Maßnahmeeinrichtung 76 auf, die beispielsweise Zugriff auf die Füllgrade F₁ - Fp der Frame-Zwischenspeicher 62₁ - 62ₚ aufweist. Die Maßnahmeeinrichtung 76 verwendet die Pegelwerte F₁ - Fₚ für eine Steuerung bzw. Variation der Maximalwerte Rₘₐₓ und Cₘₐₓ von diesen strengen Werten auf um diese strengen Werte schwankende Werte R'ₘₐₓ und C'ₘₐₓ. Beispielsweise sorgt sie für die Einhaltung einer bestimmten maximalen Gesamtzielkomplexität C und damit der obigen Echtzeitbedingung, indem sie, wenn der Frame-Zwischenspeicher 62 einer bestimmten Kodiereinrichtung zu sehr anwächst und damit Gefahr läuft, voll zu werden, auf die Optimierungseinheit 72 derart Einfluss nimmt, dass die Komplexitätsnebenbedingung im nächsten Optimierungsschritt verschärft wird, nämlich durch Reduktion von C'ₘₐₓ. Bei der Optimierung mit angepasster Nebenbedingung resultiert dann ein neuer Parametersatz X (a') mit geringer Komplexität; d.h. a'ₚ<aₚ.

Selbst wenn also die Steuerung 72 in einer Kodierung resultiert, welche die Ratenebenbedingung bzw. Komplexitätsnebenbedingung nicht genau einhält, steuert die Maßnahmeeinrichtung 76 dieser Überbelastung entgegen, indem sie die gesamte zur Verfügung stehende Komplexität C'ₘₐₓ bzw. Bitrate R'ₘₐₓ scheinbar reduziert. In diesem Fall ergänzen sich also Optimierungseinrichtung 72 und Maßnahmeeinrichtung 76 insofern, als die Maßnahmeeinrichtung 76 dafür sorgt, dass die Optimierungen durch die Optimierungseinrichtung 72 nicht zu einer Überbelastung führen.

Auf ähnliche Weise nutzt die Maßnahmeeinrichtung 76 Füllgrade B₁ - Bₚ, die von dem Bit-Zwischenspeicher 64₁ - 64ₚ an die Maßnahmeeinrichtung 76 signalisiert werden. Diese verwendet die Maßnahmeeinrichtung 76 dann zur Ratensteuerung bzw. Ratenkorrektur, nämlich um die Einhaltung einer bestimmten Zielbitrate Rₘₐₓ zu bewerkstelligen, mit der das gemultiplexte Gesamtsignal 56 übertragen wird, wodurch eine Bitratenbedingung eingehalten wird. Wächst nämlich der Füllgrad der Bit-Zwischenspeicher 64₁ - 64ₚ zu sehr, sorgt die Maßnahmeeinrichtung 76 dafür, dass die Ratennebenbedingung in Form von Rₘₐₓ scheinbar reduziert wird, d.h. beispielsweise von Rₘₐₓ auf R'ₘₐₓ < Rₘₐₓ geändert wird. Die Optimierung unter der angepassten Nebenbedingung R'ₘₐₓ führt dann zu der Wahl von Kodierparametern mit reduzierter Bitrate R(x), wie z.B. durch Umstellen auf einen anderen Kodierparametersatz, bei dem die Quantisierungsschrittweite Q relativ zu dem aktuellen Kodierparametersatz erhöht ist. Kodiereinrichtungen, die aufgrund einer solchen Auswahl durch die Optimierungseinrichtung 72 eine zu niedrige Bitrate aufweisen, erhalten dann aufgrund der Maßnahmeeinrichtung 76 einen veränderten Kodierparametersatz, um der zu niedrigen Kodierrate entgegenzuwirken, die dafür verantwortlich ist, dass der entsprechende Bit-Zwischenspeicher zu voll wird.

In anderen Worten ausgedrückt, wird die Maßnahmeneinrichtung 76 also für die Regelung der Randbedingung verwendet. D.h. wenn z.B. die tatsächlich zu Verfügung stehende Rechenleistung Cmax ist und aufgrund eines Schätzfehlers bzw. Ungenauigkeit der Steuerung, die tatsächlich resultierende Komplexität in einem Arbeitsschritt C = C (X1) + C (X2) + ... + C(XP) = Cmax - dC ist, wenn also die Randbedingung um dC über- oder unterschritten würde, dann kann im nächsten Arbeitsschritt eine angepasste Randbedingung Cmax' = Cmax - dC. verwendet werden. D.h. die Maßnahmeneinrichtung "täuscht" der Optimierungseinrichtung einen um den Fehler reduzierte Randbedingung vor. So wird die Randbedingung über mehrerer Schritte geregelt und wird im Mittel eingehalten. Die Maßnahmeneinrichtung 76 kümmert sich insbesondere um die Komplexitätskontrolle und die Ratenkontrolle. Die Komplexitätskontrolle ist unsensitiv dafür, welcher Kodiereinrichtung der Zwischenspeicher zugeordnet ist, der den extremen Füllstand anzeigt. Vielmehr wird die Gesamtabweichung über alle Kodiereinrichtungen (dC = Cmax - C (X1) - C(X2) - ... - C(XP) bzw. dR = Rmax - R(X1) - R (X2) - ... - R(XP)) berücksichtigt und die angepasste Randbedingung im nächsten Schritt wieder auf alle Kodiereinrichtungen angewendet. Ähnlich verhält es sich mit der Ratenkontrolle.

Zusammenfassend sorgt also bei dem Ausführungsbeispiel von Fig. 3 - 6 die Steuerung 60 für eine optimierte Rechenleistungsaufteilung unter den Kodierreinrichtungen durch Schätzen der CD-Kompromisse in jedem Programm basierend auf der Beobachtung in der Vergangenheit. Die Steuerung 60 kann die Möglichkeit ausnutzen, die Gesamtlast durch Aussondieren dessen zu steuern, welchen Effekt es hat, die augenblicklichen Kodierparameter auf geänderte Kodierparameter X' in lediglich einem Teilsatz der Encoder zu einem gegebenen Zeitpunkt zu ändern. Dazu wählt sie wie im Vorhergehenden erwähnt beispielsweise eine komplexere B-Frame-Kodierung in einem der Kodiereinrichtungen aus, während P-Frames in allen anderen Kodiereinrichtungen verwendet werden. Für die Kodierung des nächsten Frames wird dann eine unterschiedliche Kodiereinrichtung gewählt, um ein B-Frame zu kodieren usw. Basierend auf den beobachteten CD-Kompromissen weist dann die Steuerung 60 wie im Vorhergehenden beschrieben die Verarbeitungsleistung jeder Kodiereinrichtung derart zu, dass die Gesamtstörung minimiert wird, während die Gesamtkomplexität unterhalb einer bestimmten Zielschwelle C bleibt. Die zugewiesene Komplexität wird durch Auswählen geeigneter Kodierparameter X realisiert, d.h. unter Verwendung oben beschriebener Komplexitätssteuerung. Basierend auf beobachteten RD-Kompromissen kann die Steuerung 60 ferner jeder Kodiereinrichtung eine Bitrate zuweisen, derart, dass die Gesamtstörung minimiert wird, während die Gesamtbitrate unterhalb einer bestimmten Zielschwelle R gehalten wird. Die zugewiesene Bitrate wird durch Auswählen der geeigneten Kodierparameter X erhalten, wie z.B. durch geeignetes Auswählen der Quantisierungsschrittweite Q, die durch die Kodiereinrichtungen verwendet werden soll, um beispielsweise ein Restsignal in dem Fall einer hybriden Kodierung zu kodieren. Diese Ratensteuerung ergibt dann in Kombination mit der CD-Optimierung einen über ein reine RD-Optimierung hinausgehende Effektivitätssteigerung.

Obige Ausführungsbeispiele beruhten vernehmlich darauf, dass die Rechenlast zwischen mehreren Kodiereinrichtungen verteilt wurde, um die Last auszugleichen, und die Gesamtqualität zu optimieren. Dabei wurde ein Lastausgleich verwendet, um die Arbeitslast von Kodiereinrichtungen auf beispielsweise mehrere CPUs und/oder mehrere CPU-Kerne zu verteilen. Bei dem Ausführungsbeispiel von Fig. 3 - 6 wurde dabei nicht nur die Bitrate verteilt, um auf möglichst beste Art und Weise ein Bitratenbeschränkung einer Kapazität R auszunutzen, sondern die Komplexität wurde unter mehreren Kodiereinrichtungen verteilt, um eine Verarbeitungsplattform einer Kapazität C optimal auszunutzen. Dabei wurde durch eine Kombination beider Dimensionen ein weiterer Gewinn erzielt. Wie in dem Ausführungsbeispiel von Fig. 2 beschrieben, bietet aber bereits eine CD-Optimierung allein einen Gewinn in dem Fall von beispielsweise einer Kodierung mit fester Bitrate.

Bezug nehmend auf die vorhergehenden Ausführungsbeispiele wird noch darauf hingewiesen, dass die vorliegende Erfindung nicht auf die Videokodierung beschränkt ist. Vielmehr kann die vorliegende Erfindung beispielsweise auch bei der Audiokodierung zur Kodierung mehrerer Audiosignale eingesetzt werden. Auch ist die vorliegende Erfindung nicht auf Fälle beschränkt, bei denen eine Gesamtbitrate eingehalten werden muss. Vielmehr ist die vorliegende Erfindung auch dann vorteilhaft, wenn die einzelnen kodierten Informationssignale einzeln weiterverwendet werden. Ein Vorteil bei der Verwendung in Verbindung mit DVB-H besteht allerdings darin, dass dort aufgrund des Zeitmultiplex bzw. der Dauer der Zeitschlitze, innerhalb welcher lediglich ein entsprechender Zeitausschnitt derselben zur Übertragung eines der Programme verwendet wird, nämlich in so genannten Bursts, darin, dass das Vorsehen der Bit-Zwischenspeicher 64₁ - 64ₚ bei diesen Anwendungen keinen Nachteil mit sich bringt, da ein solcher Zwischenspeicher aufgrund des Zeitmultiplex-Betriebes ohnehin vorhanden sein muss, um die Daten von Burst zu Burst bzw. Zeitrahmen zu Zeitrahmen zu sammeln.

Bezüglich der Plattform, auf denen die Kodiereinrichtungen implementiert sind, wird darauf hingewiesen, dass im Vorhergehenden zwar der Fokus stark auf eine Softwareimplementierung dieser Kodiereinrichtung gelegt wurde, dass aber grundsätzlich auch eine Implementierung in Hardware möglicht ist, wobei beispielsweise eine gleiche Kodieraufgabe erledigende Einheiten redundant innerhalb der Plattform 52 vorgesehen sind, und zur Verarbeitung beispielsweise der einzelnen Makroblöcke innerhalb der Bilder der Programme je nach zugewiesener Kodierkomplexität bzw. Rechenleitung an die einzelnen Kodiereinrichtungen zum Abarbeiten der Kodieraufgabe an verschiedene Programme verteilt werden.

Ferner sei noch darauf hingewiesen, dass anstelle eines Kodierparametersatzes auch nur ein Kodierparameter einer Kodiereinrichtung eingestellt wird. Dieser muss für die einzelnen Kodiereinrichtungen auch nicht der gleiche sein. Zudem müssen auch die Kodiereinrichtungen auch nicht identisch sein. Sie könnten vielmehr auch unterschiedlich sein. Für die Einstellung der Kodierparameter müssen die Kodierkomplexitäten nicht notwendigerweise eingemessen werden, wie es bei Fig. 3 beschrieben wurde, denn die Signalabhängigkeit der Kodierkomplexität kann beispielsweise je nach Kodiereinrichtungstyp auch nur gering oder gar nicht vorhanden sein, so dass allein anhand der Kodierparametereinstellung auf die Kodierkomplexität geschlossen werden kann. Ferner sei erwähnt, dass eine "Minimierung" gemäß der vorliegenden Erfindung auch eine solche einschließen soll, die noch mit einer Nebenbedingung verknüpft ist. In Übertragung auf obige Ausführungsbeispiele könnten deshalb neben den beiden Raten- und Komplexitätsnebenbedingungen auch noch weitere vorgesehen sein. Ferner sei darauf hingewiesen, dass die oben im Zusammenhang mit der Minimierung der Kodierstörung bzw. der Maximierung der Kodierqualität, was ebenfalls als gleichbedeutend angesehen werden soll, genannten Summen von Komplexitäten, Störungen und/oder Raten auch gewichtete Summen sein könnten. Anstelle von Summen können auch Kombinationen allgemeinerer Art verwendet werden, wie z.B. Quadratsummen usw.

Die oben beschriebenen Ausführungsbeispiele beschreiben somit eine Vorrichtung zur Kodierung einer Mehrzahl von Informationssignalen unter Verwendung einer gemeinsamen Rechenleistung, mit einer Mehrzahl von Kodiereinrichtungen 58₁-58ₚ zur Kodierung eines jeweils unterschiedlichen der Informationssignale unter Verwendung der gemeinsamen Rechenleistung, wobei jede Kodiereinrichtung über zumindest einen jeweiligen Kodierparameter X₁-Xₚ hinsichtlich ihres Kodierkomplexität/Kodierstörung-Verhaltens steuerbar ist, einer Einrichtung 12 zum Liefern von, für jede der Kodiereinrichtungen 58₁-58ₚ, Informationen, die von dem jeweiligen Informationssignal abhängen und eine Kodierstörung D der jeweiligen Kodiereinrichtung anzeigen, und einer Einrichtung 16; 60 zum Einstellen der Kodierparameter X₁-Xₚ abhängig von den signalabhängigen Informationen unter Berücksichtigung der gemeinsamen Rechenleistung derart, dass eine Summe von Kodierkomplexitäten C der Kodiereinrichtungen einen von der gemeinsamen Rechenleistung abhängigen Wert Cₘₐₓ nicht überschreitet, wobei die Einrichtung 16; 60 zum Einstellen und die Mehrzahl von Kodiereinrichtungen 58₁-58ₚ derart zusammenwirken, dass in Bezug auf aufeinanderfolgende Zeitintervalle 80 eine Verteilung der gemeinsamen Rechenleistung von den Kodierparametern oder einer Kodierkomplexität der einzelnen Kodiereinrichtungen abhängt. Dabei kann die Vorrichtung ferner eine Einrichtung 76 zum Einstellen des von der gemeinsamen Rechenleistung abhängigen Wertes aufweisen. Dabei kann die Einrichtung 60 zum Einstellen des von der gemeinsamen Rechenleistung abhängigen Wertes wiederum ausgebildet sein, um auf ein erstes Zwischenspeicher-Füllstand-Signal F₁-Fₚ hin, das anzeigt, dass ein einer der Mehrzahl von Ködiereinrichtungen 58₁-58ₚ vorgeschalteter Zwischenspeicher 62₁-62ₚ dazu tendiert, voll zu werden, durch Verringern des von der gemeinsamen Rechenleistung abhängigen Wertes anzusprechen. Zusätzlich oder alternativ kann die Einrichtung 60 zum Einstellen des von der gemeinsamen Rechenleistung abhängigen Wertes ausgebildet sein, um auf ein zweites Zwischenspeicher-Füllstand-Signal B₁-Bₚ hin, das anzeigt, dass ein einer der Mehrzahl von Kodiereinrichtungen 58₁-58ₚ nachgeschalteter Zwischenspeicher 64₁-64ₚ dazu tendiert, voll zu werden, durch Erhöhen des von der gemeinsamen Rechenleistung abhängigen Wertes anzusprechen. Abgesehen davon kann die Einrichtung zum Einstellen 16; 60 derart ausgebildet sein, dass die Kodierparameter eine bei der Kodierung zu verwendende Quantisierungsschrittweite Q, einen zu verwendenden Frame-Typ, einen bei einer Bewegungsschätzung maximalen Suchraum zur Erkennung einander zugehöriger Bildbestandteile in einem aktuellen Bild und einem Referenzbild, eine Anzahl zu verwendender Referenzframes, die für eine Bewegungsschätzung zu durchsuchen sind, einen Modusentscheidungsalgorithmus und/oder eine Suchtiefe für eine Modusentscheidung betreffen.

Jedes Informationssignal kann ein Audiosignal und/oder ein Videosignal umfassen. Zudem können die Ausgänge der Kodiereinrichtungen mit jeweils einem Eingang einer Multiplexeinrichtung zur gemeinsamen Übertragung der durch die Kodiereinrichtungen kodierten Informationssignale über einen gemeinsamen Übertragungskanal gekoppelt sein. Dabei kann die Multiplexeinrichtung ausgebildet sein, um die gemeinsame Übertragung in einem Zeitmultiplexbetrieb vorzunehmen, derart, dass pro Zeitrahmen ein gemeinsamer, dem Zeitrahmen entsprechender Zeitabschnitt der kodierten Informationssignale übertragen wird.

Die Mehrzahl von Kodiereinrichtungen können ausgebildet sein, um die Mehrzahl von Informationssignalen in einem gemeinsamen Zeitraster segmentweise zu kodieren, so dass pro Zeitrasterbereich eine Segment des jeweiligen Informationssignals kodiert wird, und bei Abschluss einer Kodierung eines aktuellen Segments des jeweiligen Informationssignals mit der Kodierung eines nächsten Segmentes des jeweiligen Informationssignals bis zu dem Beginn des nächsten Zeitratserbereiches mit der Kodierung des jeweiligen Informationssignals auszusetzen.

Von einem anderen Standpunkt aus betrachtet beschreiben die oben beschriebenen Ausführungsbeispiele eine Vorrichtung zur Kodierung einer Mehrzahl von Videosignalen unter Verwendung einer gemeinsamen Rechenleistung, mit einer Mehrzahl von Videokodiereinrichtungen 58₁-58ₚ zur Kodierung eines jeweils unterschiedlichen der Videosignale unter Verwendung der gemeinsamen Rechenleistung, wobei die Videokodiereinrichtungen ausgebildet sind, um eine bewegungskompensierte Schätzung von Frames und eine verlustbehaftete Kodierung eines Fehlers der bewegungskompensierte Schätzung durchzuführen, einer Einrichtung 12 zum Liefern von, für jede der Videokodiereinrichtungen 58₁-58ₚ, signalabhängigen Informationen, die von dem jeweiligen Videosignal abhängen und eine Kodierstörung D der jeweiligen Videokodiereinrichtung anzeigen, und einer Einrichtung 16; 60 zum Einstellen von Kodierparametern X₁-Xₚ der Mehrzahl von Videokodiereinrichtungen 58₁-58ₚ abhängig von den signalabhängigen Informationen, wobei die Kodierparameter die bewegungskompensierte Schätzung betreffen und eine Kodierkomplexität der Videokodiereinrichtungen 58₁-58ₚ beeinflussen. Dabei kann die Einrichtung 16; 60 zum Einstellen ausgebildet sein, die Einstellung unter Berücksichtigung der gemeinsamen Rechenleistung derart durchzuführen, dass eine Kombination der Kodierkomplexitäten C der Videokodiereinrichtungen einen von der gemeinsamen Rechenleistung abhängigen Wert C'ₘₐₓ nicht überschreitet, wobei dabei die Einrichtung 16; 60 zum Einstellen und die Mehrzahl von Videokodiereinrichtungen 58₁-58ₚ derart zusammenwirken können, dass in Bezug auf aufeinanderfolgende Zeitintervalle 80 eine Verteilung der gemeinsamen Rechenleistung von den Kodierparametern oder der Kodierkomplexität der einzelnen Videokodiereinrichtungen abhängt.

Insbesondere wird darauf hingewiesen, dass abhängig von den Gegebenheiten das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

## Patentansprüche

1. Vorrichtung zur Kodierung einer Mehrzahl von Informationssignalen unter Verwendung einer gemeinsamen Rechenleistung, mit
einer Mehrzahl von Kodiereinrichtungen (58₁-58ₚ) zur Kodierung eines jeweils unterschiedlichen der Informationssignale unter Verwendung der gemeinsamen Rechenleistung, wobei jede Kodiereinrichtung über zumindest einen jeweiligen Kodierparameter (X₁-Xₚ) hinsichtlich ihres Rechenkomplexität/Kodierstörung-Verhaltens steuerbar ist;
einer Einrichtung (12) zum Liefern von, für jede der Kodiereinrichtungen (58₁-58ₚ), Informationen, die von dem jeweiligen Informationssignal abhängen und eine Kodierstörung (D) der jeweiligen Kodiereinrichtung anzeigen; und
einer Einrichtung (16;60) zum Einstellen der Kodierparameter (X₁-Xₚ) abhängig von den signalabhängigen Informationen unter Berücksichtigung der gemeinsamen Rechenleistung derart, dass eine Summe von Rechenkomplexitäten (C) der Kodiereinrichtungen einen von der gemeinsamen Rechenleistung abhängigen Wert (Cₘₐₓ) nicht überschreitet,
wobei die Einrichtung (16;60) zum Einstellen und die Mehrzahl von Kodiereinrichtungen (58₁-58ₚ) derart zusammenwirken, dass in Bezug auf aufeinanderfolgende Zeitintervalle (80) eine Verteilung der gemeinsamen Rechenleistung von den Kodierparametern oder einer Rechenkomplexität der einzelnen Kodiereinrichtungen abhängt.

2. Vorrichtung gemäß Anspruch 1, bei der die Einrichtung (12) zum Liefern ausgebildet ist, um für jede der Kodiereinrichtungen (58₁-58ₚ) die signalabhängigen Informationen in Zuordnung (D (X₁) - D (Xₚ)) zu einem Wert des jeweiligen Kodierparameters (X₁-Xₚ) zu liefern.

3. Vorrichtung gemäß Anspruch 2, bei der die Kodiereinrichtungen (58₁-58ₚ) verlustbehaftete Kodierer sind, die ausgebildet sind, um eine Rekonstruktion eines bereits zumindest einen verlustbehafteten Teil der Kodierung durchlaufen habenden Frames des jeweiligen Informationssignals als Prädiktor für ein noch nicht kodiertes Frame des jeweiligen Informationssignals heranzuziehen, und bei der die Einrichtung zum Liefern ausgebildet ist, um die signalabhängigen Informationen auf Basis der Rekonstruktion und dem jeweiligen Informationssignal zu ermitteln.

4. Vorrichtung gemäß Anspruch 2 oder 3, bei der die Einrichtung zum Einstellen (16;60) ausgebildet ist, um die Einstellung der Kodierparameter (X₁-Xₚ) abhängig von, für jede der Kodiereinrichtungen, den signalabhängigen Informationen, die unterschiedlichen Werten des jeweiligen Kodierparameters zugeordnet sind, vorzunehmen.

5. Vorrichtung gemäß einem der Ansprüche 2 bis 4, bei der die Einrichtung zum Einstellen (16;60) ausgebildet ist, um die Einstellung der Kodierparameter (X₁-Xₚ) nach einem vorbestimmten Algorithmus derart vorzunehmen, dass eine durch eine Kombination der den eingestellten Werten der Kodierparameter zugeordneten Kodierstörungen der Kodiereinrichtungen festgelegte Gesamtstörung unter Berücksichtigung der gemeinsamen Rechenleistung minimiert wird.

6. Vorrichtung gemäß Anspruch 5, bei der die Einrichtung zum Einstellen (16;60) ferner ausgebildet ist, um bei der Einstellung der Kodierparameter (X₁-Xₚ) auch eine maximale Gesamtbitrate zu berücksichtigen.

7. Vorrichtung gemäß Anspruch 5 oder 6, bei der die Einrichtung (12) zum Liefern derart ausgebildet ist, dass die signalabhängigen Informationen für jede der Kodiereinrichtungen (58₁-58ₚ) in Zuordnung zu der Kodierstörung auch die Rechenkomplexität (C(X₁)-C(Xₚ)) der jeweiligen Kodiereinrichtung anzeigen.

8. Vorrichtung gemäß Anspruch 7, bei der die Einrichtung (12) zum Liefern derart ausgebildet ist, dass die signalabhängigen Informationen die Rechenkomplexität (C(X₁)-C(Xₚ)) der jeweiligen Kodiereinrichtung in Einheiten von Befehlszyklen anzeigen.

9. Vorrichtung gemäß einem der Ansprüche 5 bis 8, bei der die Einrichtung zum Einstellen (16; 60) derart ausgebildet ist, dass eine Kombination der Rechenkomplexitäten, die den eingestellten Werten der Kodierparameter zugeordneten Kodierstörungen der Kodiereinrichtungen zugeordnet sind, den von der gemeinsamen Rechenleistung abhängigen Wert nicht überschreitet.

10. Vorrichtung gemäß einem der Ansprüche 5 bis 9, bei der die Einrichtung (12) zum Liefern derart ausgebildet ist, dass die signalabhängigen Informationen für jede der Kodiereinrichtungen (58₁-58ₚ) in Zuordnung zu der Kodierstörung auch die Kodierrate (R(X₁)-R(Xₚ)) der jeweiligen Kodiereinrichtung anzeigen.

11. Vorrichtung gemäß einem der Ansprüche 5 bis 10, bei der die Einrichtung zum Einstellen (16; 60) derart ausgebildet ist, dass eine Kombination der Kodierraten, die den eingestellten Werten der Kodierparameter zugeordneten Kodierstörungen der Kodiereinrichtungen zugeordnet sind, einen eine maximale Gesamtbitrate angebenden Wert nicht überschreitet.

12. Vorrichtung gemäß einem der Ansprüche 5 bis 11, bei der die Einrichtung zum Einstellen (16; 60) ausgebildet ist, um, für jede Kodiereinrichtung, intermittierend den jeweiligen Kodierparameter abweichend von einem durch den vorbestimmten Algorithmus angezeigten Wert auf einen alternativen, zu dem angezeigten Wert unterschiedlichen Wert umzustellen.

13. Vorrichtung gemäß Anspruch 12, bei der die Einrichtung zum Einstellen (60) ausgebildet ist, um die intermittierende Umstellung derart vorzunehmen, dass zu einem beliebigen Zeitpunkt höchstens der Kodierparameter eines vorbestimmten maximalen echten Teils der Mehrzahl von Kodiereinrichtungen auf einen jeweiligen alternativen Wert umgestellt ist.

14. Verfahren zur Kodierung einer Mehrzahl von Informationssignalen unter Verwendung einer Mehrzahl von Kodiereinrichtungen (58₁-58ₚ) zur Kodierung eines jeweils unterschiedlichen der Informationssignale unter Verwendung der gemeinsamen Rechenleistung, wobei jede Kodiereinrichtung über zumindest einen jeweiligen Kodierparameter hinsichtlich ihres Rechenkomplexität/Kodierstörung-Verhaltens steuerbar ist, mit folgenden Schritten:
Liefern von, für jede der Kodiereinrichtungen, signalabhängigen Informationen, die von dem jeweiligen Informationssignal abhängen und eine Kodierstörung der jeweiligen Kodiereinrichtung anzeigen; und
Einstellen der Kodierparameter abhängig von den signalabhängigen Informationen unter Berücksichtigung der gemeinsamen Rechenleistung derart, dass eine Kombination von Rechenkomplexitäten der Kodiereinrichtungen einen von der gemeinsamen Rechenleistung abhängigen Wert nicht überschreitet,
wobei der Schritt des Einstellens und die Mehrzahl von Kodiereinrichtungen derart zusammenwirken, dass in Bezug auf aufeinanderfolgende Zeitintervalle eine Verteilung der gemeinsamen Rechenleistung von den Kodierparametern oder einer Rechenkomplexität der einzelnen Kodiereinrichtungen abhängt.

15. Computer-Programm mit einem Programmcode zur Durchführung des Verfahrens nach Anspruch 14, wenn das Computer-Programm auf einem Computer abläuft.

## Claims

1. A device for encoding a plurality of information signals using a joint computing power, comprising:
a plurality of encoding means (58₁-58_{P}) for encoding a respectively different one of the information signals using the joint computing power, wherein each encoding means is controllable via at least one respective encoding parameter (X₁-X_{P}) with regard to its computing complexity/encoding distortion performance;
a means (12) for providing information for each of the encoding means (58₁-58_{P}) which depends on the respective information signal and indicates an encoding distortion (D) of the respective encoding means; and
a means (16; 60) for setting the encoding parameters (X₁-X_{P}) depending on the signal-dependent information considering the joint computing power such that a sum of computing complexities (C) of the encoding means does not exceed a value (Cₘₐₓ) which depends on the joint computing power,
wherein the means (16; 60) for setting and the plurality of encoding means (58₁-58p) cooperate such that with regard to subsequent time intervals (80) a distribution of the joint computing power depends on the encoding parameters or a computing complexity of the individual encoding means.

2. The device according to claim 1, wherein the means (12) for providing is implemented to provide, for each of the encoding means (58₁-58_{P}), the signal-dependent information in allocation (D(X₁)-D(X_{P})) to a value of the respective encoding parameter (X₁-X_{P}).

3. The device according to claim 2, wherein the encoding means (58₁-58_{P}) are lossy encoders which are implemented to use a reconstruction of a frame, which already passed at least one lossy part of the encoding, of the respective information signal as a predictor for a frame of the respective information signal which is not yet encoded, and wherein the means for providing is implemented to determine the signal-dependent information on the basis of the reconstruction and the respective information signal.

4. The device according to claims 2 or 3, wherein the means for setting (16; 60) is implemented to execute the setting of the encoding parameters (X₁-X_{P}) for each of the encoding means depending on the signal-dependent information allocated to the different values of the respective encoding parameter.

5. The device according to one of claims 2 to 4, wherein the means for setting (16; 60) is implemented to execute the setting of the encoding parameters (X₁-X_{P}) according to a predetermined algorithm such that a total distortion determined by a combination of the encoding distortions of the encoding means associated to the set values of the encoding parameters is minimized considering the joint computing power.

6. The device according to claim 5, wherein the means for setting (16; 60) is further implemented to consider a maximum total bit rate when setting the encoding parameters (X₁-X_{P}).

7. The device according to claims 5 or 6, wherein the means (12) for providing is implemented such that the signal-dependent information for each of the encoding means (58₁-58_{P}) in allocation with the encoding distortion also indicates the computing complexity (C(X₁)-C(X_{P})) of the respective encoding means.

8. The device according to claim 7, wherein the means (12) for providing is implemented such that the signal-dependent information indicates the computing complexity (C(X₁)-C(X_{P})) of the respective encoding means in units of instruction cycles.

9. The device according to one of claims 5 to 8, wherein the means for setting (16; 60) is implemented such that a combination of the computing complexities associated with the encoding distortions of the encoding means associated with the set values of the encoding parameters does not exceed the value depending on the joint computing power.

10. The device according to one of claims 5 to 9, wherein the means (12) for providing is implemented such that the signal-dependent information for each of the encoding means (58₁-58_{P}) in allocation with the encoding distortion also indicates the encoding rate (R(X₁)-R(X_{P})) of the respective encoding means.

11. The device according to one of claims 5 to 10, wherein the means for setting (16; 60) is implemented such that a combination of the encoding rates allocated with the encoding distortions of the encoding means allocated with the set values of the encoding parameters does not exceed a value indicating a maximum total bit rate.

12. The device according to one of claims 5 to 11, wherein the means for setting (16; 60) is implemented to change, for each encoding means, intermittently the respective encoding parameter deviating from a value indicated by the predetermined algorithm, to an alternative value different from the indicated value.

13. The device according to claim 12, wherein the means for setting (60) is implemented to execute the intermittent change such that at any point in time no more than the encoding parameter of a predetermined maximum real part of the plurality of encoding means is set to a respective alternative value.

14. A method for encoding a plurality of information signals using a plurality of encoding means (58₁-58_{P}) for encoding a respectively different one of the information signals using the joint computing power, wherein each encoding means is controllable via at least one respective encoding parameter with regard to its computing complexity/encoding distortion performance, comprising:
providing, for each of the encoding means, signal-dependent information depending on the respective information signal and indicating an encoding distortion of the respective encoding means; and
setting the encoding parameters depending on the signal-dependent information considering the joint computing power such that a combination of computing complexities of the encoding means does not exceed a value which depends on the joint computing power,
wherein the step of setting and the plurality of encoding means cooperate such that, with regard to subsequent time intervals, a distribution of the joint computing power depends on the encoding parameters or a computing complexity of the individual encoding means.

15. A computer program having a program code for executing the method of claim 14, when the computer program is executed on a computer.

## Revendications

1. Dispositif de codage d'une pluralité de signaux d'informations à l'aide d'une puissance de calcul commune, avec
une pluralité de moyens de codage (58₁ à 58_{P}) destinés à coder l'un différent respectif des signaux d'informations à l'aide de la puissance de calcul commune, chaque moyen de codage pouvant être commandé par l'intermédiaire d'au moins un paramètre de codage respectif (X₁ à X_{P}) en ce qui concerne sa complexité de calcul/comportement de perturbation de codage;
un moyen (12) destiné à fournir, pour chacun des moyens de codage (58₁ à 58_{P}), des informations qui dépendent d'un signal d'informations respectif et indiquent une perturbation de codage (D) du moyen de codage respectif; et
un moyen (16; 60) destiné à régler les paramètres de codage (X₁ à X_{P}) en fonction des informations fonction du signal en tenant compte de la puissance de calcul commune de sorte qu'une somme de complexités de calcul (C) des moyens de codage n'excède pas une valeur (Cₘₐₓ) fonction de la puissance de calcul commune,
le moyen (16; 60) destiné à régler et la pluralité de moyens de codage (58₁ à 58_{P}) coopérant de sorte que, en ce qui concerne les intervalles de temps successifs (80), une répartition de la puissance de calcul commune dépende des paramètres de codage ou d'une complexité de calcul des moyens de codage individuels.

2. Dispositif selon la revendication 1, dans lequel le moyen (12) destiné à fournir est réalisé pour fournir, pour chacun des moyens de codage (58₁ à 58p), les informations fonction du signal en association (D(X₁) à D(X_{P})) avec une valeur du paramètre de codage respectif (X₁ à X_{P}).

3. Dispositif selon la revendication 2, dans lequel les moyens de codage (58₁ à 58_{P}) sont des codeurs à perte qui sont réalisés pour utiliser, comme prédicteur pour une trame non encore codée du signal d'informations, une reconstruction de trames du signal d'informations ayant déjà parcouru au moins une partie à perte du codage, et dans lequel le moyen destiné à fournir est réalisé pour déterminer les informations fonction du signal sur base de la reconstruction et du signal d'informations respectif.

4. Dispositif selon la revendication 2 ou 3, dans lequel le moyen destiné à régler (16; 60) est réalisé pour procéder au réglage des paramètres de codage (X₁ à X_{P}), pour chacun des moyens de codage, en fonction des informations dépendant du signal qui sont associées à des valeurs différentes du paramètre de codage respectif.

5. Dispositif selon l'une des revendications 2 à 4, dans lequel le moyen destiné à régler (16; 60) est réalisé pour procéder au réglage des paramètres de codage (X₁ à X_{P}) après un algorithme prédéterminé de sorte que soit minimisée, compte tenu de la puissance de calcul commune, une perturbation fixée par une combinaison des perturbations de codage des moyens de codage associées aux valeurs réglées des paramètres de codage.

6. Dispositif selon la revendication 5, dans lequel le moyen destiné à régler (16; 60) est réalisé par ailleurs pour tenir compte, lors du réglage des paramètres de codage (X₁ à X_{P}), également d'un débit binaire total maximum.

7. Dispositif selon la revendication 5 ou 6, dans lequel le moyen (12) destiné à fournir est réalisé de sorte que les informations dépendant du signal indiquent, pour chacun des moyens de codage (58₁ à 58_{P}), en association avec la perturbation de codage également la complexité de calcul (C(X₁) à C(X_{P})) du moyen de codage respectif.

8. Dispositif selon la revendication 7, dans lequel le moyen (12) destiné à fournir est réalisé de sorte que les informations dépendant du signal indiquent la complexité de calcul (C(X₁) à C(X_{P})) du moyen de codage respectif en unités de cycles de commande.

9. Dispositif selon l'une des revendications 5 à 8, dans lequel le moyen destiné à régler (16; 60) est réalisé de sorte qu'une combinaison des complexités de calcul qui sont associées aux perturbations de codage des moyens de codage associées aux valeurs réglées des paramètres de codage n'excède pas la valeur fonction de la puissance de calcul commune.

10. Dispositif selon l'une des revendications 5 à 9, dans lequel le moyen (12) destiné à fournir est réalisé de sorte que les informations dépendant du signal indiquent, pour chacun des moyens de codage (58₁ à 58_{P}), en association avec la perturbation de codage également les taux de codage (R(X₁) à R(X_{P})) du moyen de codage respectif.

11. Dispositif selon l'une des revendications 5 à 10, dans lequel le moyen destiné à régler (16; 60) est réalisé de sorte qu'une combinaison des taux de codage associés aux perturbations de codage des dispositifs de codage associées aux valeurs réglées des paramètres de codage n'excède pas une valeur indiquant un débit binaire total maximum.

12. Dispositif selon l'une des revendications 5 à 11, dans lequel le moyen destiné à régler (16; 60) est réalisé pour convertir, pour chaque dispositif de codage, de manière intermittente, le paramètre de codage respectif différant d'une valeur indiquée par l'algorithme prédéterminé à une valeur alternative différente de la valeur indiquée.

13. Dispositif selon la revendication 12, dans lequel le moyen destiné à régler (60) est réalisé pour procéder à la conversion intermittente de sorte qu'à tout moment quelconque tout au plus le paramètre de codage d'une partie réelle maximale prédéterminée de la pluralité de moyens de codage soit converti à une valeur alternative respective.

14. Procédé de codage d'une pluralité de signaux d'informations à l'aide d'une pluralité de moyens de codage (58₁ à 58_{P}) destinés à coder l'un différent respectif des signaux d'informations à l'aide de la puissance de calcul commune, chaque moyen de codage pouvant être commandé par l'intermédiaire d'au moins une paramètre de codage respectif en ce qui concerne leur complexité de calcul/ comportement de perturbation de codage, aux étapes suivantes consistant à:
fournir, pour chacun des moyens de codage, des informations fonction du signal qui dépendent d'un signal d'informations respectif et indiquent une perturbation de codage du moyen de codage respectif; et
régler les paramètres de codage en fonction des informations fonction du signal en tenant compte de la puissance de calcul commune de sorte qu'une combinaison de complexités de calcul des moyens de codage n'excède pas une valeur fonction de la puissance de calcul commune,
l'étape de réglage et la pluralité de moyens de codage coopérant de sorte que, en ce qui concerne les intervalles de temps successifs, une répartition de la puissance de calcul commune dépende des paramètres de codage ou d'une complexité de calcul des moyens de codage individuels.

15. Programme d'ordinateur avec un code de programme pour réaliser le procédé selon la revendication 14 lorsque le programme d'ordinateur est exécuté sur un ordinateur.
